# EUROPEAN PATENT SPECIFICATION

(11) **EP 3 968 797 B1**
(45) Date of publication and mention of the grant of the patent: **14.06.2023**
(21) Application number: 20719479.6
(22) Date of filing: 23.04.2020
(51) Int. Cl.: A24F 40/60, A24F 40/20

(54) **AN AEROSOL-GENERATING SYSTEM AND A THERMAL OUTPUT ELEMENT FOR AN AEROSOL-GENERATING SYSTEM**
AEROSOLERZEUGUNGSSYSTEM UND THERMISCHES AUSGABEELEMENT FÜR EIN AEROSOLERZEUGUNGSSYSTEM
SYSTÈME DE GÉNÉRATION D'AÉROSOLS ET ÉLÉMENT DE SORTIE THERMIQUE POUR SYSTÈME DE GÉNÉRATION D'AÉROSOLS

(30) Priority: 17.05.2019 EP 19175236
(43) Date of publication of application: 23.03.2022
(73) Proprietor: Philip Morris Products S.A., 2000 Neuchâtel (CH)
(72) Inventor: DESNERCK, Simon, 8500 Kortrijk (BE); VANCRAEYNEST, Louis-Philippe, 8500 Kortrijk (BE); TINGSTRÖM, Torsten Richard Mathias, 1007 Lausanne (CH)
(74) Representative: Williams, Andrew Richard
(86) International application number: PCT/EP2020/061365
(87) International publication number: WO 2020/233938

(56) References cited:
- EP-A1- 3 102 266
- EP-B1- 3 102 266
- US-A1- 2017 251 718
- US-A1- 2018 070 641

## Description

The present invention relates to an aerosol-generating system, to a device for use with the system, and to a method of generating an aerosol. In particular, the invention relates to handheld aerosol-generating systems and devices which vaporise an aerosol-forming substrate by heating to generate an aerosol to be puffed or inhaled by a user, and which include an interface element.

One type of aerosol-generating system is an electrically heated smoking system that generates an aerosol for a user to puff or inhale. Electrically heated smoking systems come in various forms. Some types of electrically heated smoking systems are e-cigarettes that vaporise a liquid or gel substrate to form an aerosol, or release an aerosol from a solid substrate by heating it to a certain temperature below the combustion temperature of the solid substrate.

Handheld electrically operated aerosol-generating devices and systems are known that consist of a device portion comprising a battery and control electronics, a portion for containing or receiving an aerosol-forming substrate and an electrically operated heater for heating the aerosol-forming substrate to generate an aerosol. A mouthpiece portion is also included on which a user may puff to draw aerosol into their mouth.

Some devices and systems use a liquid or gel aerosol-forming substrate stored in a storage portion. Such devices can use a wick to carry the liquid or gel aerosol-forming substrate from the storage portion to the heater where it is aerosolised. Such devices can use a displacement mechanism such as a pump and piston to displace the liquid or gel aerosol-forming substrate from the storage portion to the heater. Other types of aerosol-generating devices and systems use a solid aerosol-forming substrate that includes a tobacco material. Such devices may comprise a recess for receiving a cigarette-shaped rod comprising the solid aerosol-forming substrate, such as folded sheets that include a tobacco material. A blade-shaped heater arranged in the recess is inserted into the centre of the rod as the rod is received in the recess. The heater is configured to heat the aerosol-forming substrate to generate an aerosol without substantially combusting the aerosol-forming substrate.

Electrically heated smoking systems can provide a significantly different user experience than a conventional, combustion-based cigarette. For example, the user interacts with a device rather than lighting a cigarette. In some cases, the interaction may not necessarily be limited to a single device but can include interaction with other peripheral devices, such as a device charger, charging case, consumable holder, smartphone, tablet computer, personal computer, vending machine, or other device. Additionally, a given manufacturer may have different electrically heated smoking systems available on the market at a given time, and may introduce new products to replace older products.

Such a multitude of different systems, devices, and peripheral devices can mean a multitude of different interactions with the user. For example, depending on the particular electrically heated smoking system, exemplary activation of a given electrically heated smoking system can be performed by a single press on a button, multiple presses on a button, or an extended press on a button. Additionally, depending on the particular electrically heated smoking system, certain feedback may be provided to the user responsive to the activation, such as a vibration signal, an auditory signal, or a light signal, or no feedback may be provided responsive to the actuation. Additionally, depending on the particular electrically heated smoking system, the user may have to wait for a certain time before the aerosol can be consumed, e.g., before the heater is at a sufficient temperature to generate the aerosol. The system may or may not indicate whether a waiting time is running, and may or may not give an indication of the elapsed waiting time or remaining waiting time. Such indication, if provided, may include one or more of a number of illuminated lights, a brightness of one or more lights, a pulsing or intermittent illumination of a light, a change of colour of one or more lights, or an output of a textual or graphical interface. Additionally, depending on the particular electrically heated smoking system, the device may or may not give feedback when the consumable (e.g., liquid, gel, or solid aerosol-forming substrate) is ready for consumption, such as a vibration signal, an auditory signal, or a light signal, which may be in a state in the indication of the waiting time as indicated above. Additionally, some electrically heated smoking systems can use the same output (such as a light, vibration, or auditory signal) to indicate different functionalities or statuses of the same system, which may be confusing for the user. Similarly, some electrically heated smoking systems can use the same input element (such as a button) to provide different types of user input to the same device, which may be confusing for the user.

Additionally, different electrically heated smoking systems even from the same manufacturer may use different input elements or output elements to interact with the user in different ways than one another. For example, the user may be able to check the battery level of the smoking system using interfaces of the system itself, of a first peripheral device such as the system's charging case, and of a second peripheral device such as a smartphone associated with the system. However, the system and the peripheral devices may have different interfaces than one another, making the user's interaction with the system complex, and distracting from the smoking experience. Furthermore, outputs such as lights and vibrations may disturb others or be distracting to the user.

As such, information provided to the user by a given electrically heated smoking system may convey limited information, may be confusing, or may disturb others. This can result in a diminished experience for the user. Furthermore, interfaces on different systems - even from the same manufacturer - may differ significantly from one another. This can make it difficult for the user to switch between devices or may deter the user from trying a new system or even a new model of the same system.

An objective of the present invention is to provide the user with easily understandable feedback that conveys meaningful information, preferably without disturbing others. For example, some configurations of the present invention can enhance feedback to users by providing an interface on an aerosol-generating device that includes a thermal output element, via which the user can perceive a temperature change that conveys information. The interface, including the thermal output element, optionally can be provided in the form of a button or other distinct element which is attached to the housing of the aerosol-generating device and which is controlled by appropriate circuitry. Preferably, any peripheral devices associated with the aerosol-generating device also can include such an interface configured so as to provide the same type of output to the user, such that the user can interact with multiple components of an aerosol-generating system in a consistent manner via such interfaces. Optionally, the user receives an immediate and understandable response following actuation of the interface. For example, the interface optionally can include a user-actuatable input element that is located at or sufficiently close to the thermal output element that responsive to the user's finger, lip, or palm actuating the input element, the thermal output element is actuated so as to provide a user-perceptible temperature change to the user's finger, lip, or palm, thus providing a temperature-changing tactile interface. However, it should be understood that the thermal output element can be actuated in any suitable manner, and is not limited to use with a user-actuated input element. As an additional or alternative option, complex information can be conveyed by modulating the user-perceptible temperature change, e.g., increasing or decreasing a temperature via the interface. It will be appreciated that the present thermal output elements can avoid or reduce the need for audible or vibrational signals which the user and others may hear, as well as visible signals which the user and others may see, thus potentially improving the experience for the user and others around him or her.

US 2018/070641 A1 relates to an aerosol generating device having a heater assembly, the heater assembly having a plurality of electric heaters.

According to a first embodiment of the invention, there is provided an aerosol-generating device. The aerosol-generating device comprises a housing. The housing optionally comprises one or more of an air inlet, an air outlet, and an airflow path extending therebetween. The aerosol-generating device comprises an aerosol-generating element disposed within the housing and configured to generate an aerosol. The aerosol-generating device comprises a thermal output element coupled to the housing. The thermal output element is distinct from the aerosol-generating element. The aerosol-generating device comprises a circuit coupled to the thermal output element and configured to cause the thermal output element to generate a user-perceptible temperature change.

In some configurations, the device further includes a sensor coupled to the circuit and configured to output to the circuit a temperature of the thermal output element. The circuit optionally is configured to adjust operation of the thermal output element or to terminate operation of the thermal output element based on the temperature received from the sensor.

In some configurations, the thermal output element is selected from the group consisting of a thermoelectric device, a resistive member, an inductive member, and an infrared source. Additionally, or alternatively, the user-perceptible temperature change optionally comprises cooling. Additionally, or alternatively, the user-perceptible temperature change optionally comprises heating.

In some configurations, the device further comprises an input element configured to generate an input signal. The circuit optionally is configured to cause the thermal output element to generate the user-perceptible temperature change responsive to the input signal. Optionally, the input element is user-actuatable. In some configurations, the thermal output element is located sufficiently close to the input element that the user can perceive the temperature change while actuating the input element. As a further option, the input element and the thermal output element are arranged in a stack. Additionally, or alternatively, the input element optionally is selected from the group consisting of a mechanical button, a membrane button, a mechanical switch, a rotary encoder, a dial, a knob, a capacitive touch button, a resistive touch button, a joystick, a slider, a trigger button, a touch screen, and a magnetic switch. As another alternative, the input signal corresponds to a condition of the aerosol-generating device.

In some configurations, an aerosol-generating system comprises an aerosol-generating device such as described herein, and a peripheral device in operable communication with the aerosol-generating device. The peripheral device optionally is configured to transmit to the aerosol-generating device a signal corresponding to a condition of the aerosol-generating device. The circuit optionally is configured to cause the output element to generate the user-perceptible temperature change responsive to receipt of the signal. In nonlimiting configurations, the peripheral device optionally comprises a device charger, charging case, consumable holder, smartphone, tablet computer, personal computer, or vending machine.

In some configurations, the circuit determines a status of the device, and the user-perceptible temperature change indicates the status of the device.

In some configurations, an aerosol-generating system comprises an aerosol-generating device such as described herein and an aerosol-forming substrate, optionally wherein the aerosol-forming substrate comprises nicotine.

As used herein, the term 'aerosol-generating system' relates to a system that interacts with one or more other elements. One such element with which an 'aerosol-generating system' can interact is an aerosol-forming substrate to generate an aerosol. Another such element with which an 'aerosol-generating system' can interact is a peripheral device. An 'aerosol-generating' system optionally can interact with both an aerosol-forming substrate (e.g., provided within an aerosol-generating article) and any suitable number of peripheral devices.

As used herein, the term 'peripheral device' relates to a device that is part of an aerosol-generating system and interacts directly or indirectly with an aerosol-generating device, but is not itself an aerosol-generating device. Examples of peripheral devices include, but are not limited to, a charger for the aerosol-generating device, a charging case for the aerosol-generating device, a holder for one or more aerosol-generating articles, a smartphone, tablet computer, or personal computer configured to communicate directly or indirectly with the aerosol-generating device, or a vending machine configured to sell the aerosol-generating device or aerosol-generating articles.

As used herein, the term 'aerosol-generating article' relates to an article comprising an aerosol-forming substrate. Optionally, the aerosol-generating article also comprises one or more further components, such as a reservoir, carrier material, wrapper, etc. An aerosol-generating article may generate an aerosol that is directly inhalable into a user's lungs through the user's mouth. An aerosol-generating article may be disposable. An aerosol-generating article comprising an aerosol-forming substrate comprising tobacco may be referred to as a tobacco stick.

As used herein, the term 'aerosol-forming substrate' relates to a substrate capable of releasing one or more volatile compounds that can form an aerosol. Such volatile compounds are released by heating the aerosol-forming substrate to form a vapour. The vapour can condense to form an aerosol, for example a suspension of fine solid particles or liquid droplets in a gas such as air. An aerosol-forming substrate may conveniently be part of an aerosol-generating device or system. In some configurations, the aerosol-forming substrate comprises a gel or liquid, while in other configurations, the aerosol-forming substrate comprises a solid. The aerosol-forming substrate may comprise both liquid and solid components.

As used herein, the term 'coupled' relates to an arrangement of elements that can be directly or indirectly in contact with one another. Elements that are 'directly' coupled to one another touch one another. Elements that are 'indirectly' coupled to one another do not directly touch one another, but are attached to one another via one or more intermediate elements. Depending on the particular arrangement, elements that are part of the same device or system as one another may be 'directly' in contact with one another or 'indirectly' in contact with one another.

As used herein, the term `thermal communication' relates to elements that are coupled to one another in such a manner that a change in temperature of one such element causes a change in temperature of another such element.

As used herein, the term 'interface' relates to an element through which information can be transmitted, through which information can be received, or through which information can be both transmitted and received. An exemplary interface provided herein includes a thermal output element for transmitting information, and optionally includes a user-actuatable input element for receiving information.

As used herein, the term 'thermal output element' relates to an element that provides information to a user by generating a user-perceptible temperature change. For example, the thermal output element is configured such that when such element is actuated, a user can feel and recognize a corresponding change in temperature via the user's sense of touch. The thermal output element may be actuated in such a manner as to convey information to the user via the user-perceptible temperature change.

As used herein, the term 'user-perceptible temperature change' relates to a change of temperature that can be felt and recognized by a user. Typically, the user can feel the user-perceptible change of temperature via his or her sense of touch at a defined portion of the device or system that the user is touching, for example using his or her finger, palm, or lip. Such defined portion of the device or system at which the user-perceptible temperature change is generated can be or include, for example, as a defined outer (peripheral) portion of the housing of the device of system, or the thermal output element, or any other suitable element of the interface, device, or system that is in thermal communication with the interface element. The portion of the device or system at which the user-perceptible temperature change is generated can initially be at a first temperature, such as ambient (room) temperature, or warmer than ambient temperature, for example because of heat transferred to such element by the aerosol-generating element or because of heat transferred from the user's skin, e.g., finger or lip. Actuation of the thermal output element causes the temperature at the defined portion of the device or system to increase or decrease to a second temperature that is perceptibly different from the first temperature.

Examples of user-perceptible temperature changes generated by actuation of the thermal output element may include, for example, a temperature increase of about 0.02 degrees Celsius or greater, or a temperature increase of about 0.05 degrees Celsius or greater, or a temperature increase of about 0.1 degrees Celsius or greater, or a temperature increase of about 0.2 degrees Celsius or greater, or a temperature increase of about 0.5 degrees Celsius or greater, or a temperature increase of about 1 degree Celsius or greater, or a temperature increase of about 2 degrees Celsius or greater, or a temperature increase of about 5 degrees Celsius or greater. For example, the user-perceptible temperature increase may be in a range of about 0.02 degrees Celsius to about 10 degrees Celsius, or may be in a range of about 0.05 degrees Celsius to about 10 degrees Celsius, or may be in a range of about 0.1 degrees Celsius to about 10 degrees Celsius, or may be in a range of about 0.1 degrees Celsius to about 10 degrees Celsius, or may be in a range of about 0.2 degrees Celsius to about 10 degrees Celsius, or may be in a range of about 0.5 degrees Celsius to about 10 degrees Celsius, or may be in a range of about 1 degree Celsius to about 10 degrees Celsius, or may be in a range of about 0.05 degrees Celsius to about 5 degrees Celsius, or may be in a range of about 0.1 degrees Celsius to about 5 degrees Celsius, or may be in a range of about 0.5 degrees Celsius to about 5 degrees Celsius, or may be in a range of about 0.5 degrees Celsius to about 2 degrees Celsius.

Other examples of user-perceptible temperature changes generated by actuation of the thermal output element may include, for example, a temperature decrease of about 0.02 degrees Celsius or greater, or a temperature decrease of about 0.05 degrees Celsius or greater, or a temperature decrease of about 0.1 degrees Celsius or greater, or a temperature decrease increase of about 0.2 degrees Celsius or greater, or a temperature decrease of about 0.5 degrees Celsius or greater, or a temperature decrease of about 1 degrees Celsius or greater, or a temperature decrease of about 2 degrees Celsius or greater, or a temperature decrease of about 5 degrees Celsius or greater. For example, the user-perceptible temperature decrease may be in a range of about 0.02 degrees Celsius to about 10 degrees Celsius, or may be in a range of about 0.05 degrees Celsius to about 10 degrees Celsius, or may be in a range of about 0.1 degrees Celsius to 10 degrees Celsius, or may be in a range of about 0.1 degrees Celsius to about 10 degrees Celsius, or may be in a range of about 0.2 degrees Celsius to about 10 degrees Celsius, or may be in a range of about 0.5 degrees Celsius to about 10 degrees Celsius, or may be in a range of about 1 degree Celsius to about 10 degrees Celsius, or may be in a range of about 0.05 degrees Celsius to about 5 degrees Celsius, or may be in a range of about 0.1 degrees Celsius to about 5 degrees Celsius, or may be in a range of about 0.5 degrees Celsius to about 5 degrees Celsius, or may be in a range of about 0.5 degrees Celsius to about 2 degrees Celsius.

The user-perceptible temperature change generated by actuation of the thermal output element may be at a rate that is sufficiently high to convey relevant information to the user. For example, if the rate is too low, then the user may have difficulty perceiving the temperature change, may become annoyed at having to wait too long to obtain the information conveyed by the temperature change, or may move his or her lips, palm, or finger before all of the information is conveyed and thus miss receiving part of the information. Preferably, the user-perceptible temperature change generated by actuation of the thermal output element may be at a rate such that the change is completed within less than 10 seconds, or within less than 5 seconds, or within less than 2 seconds, or within less than 1 second, or within less than 0.5 seconds, or within less than 0.2 seconds, or within less than 0.1 seconds. For example, the user-perceptible temperature change generated by actuation of the thermal output element may be at a rate such that the change is completed within 0.1 - 10 seconds, or within 0.1-5 seconds, or within 0.5-5 seconds, or within 0.2-2 seconds, or within 0.2-1 second, or within 0.1-0.5 seconds, or within 0.1-0.2 seconds.

The user-perceptible temperature increase generated by actuation of the thermal output element may be a linear function of time, or the user-perceptible temperature increase generated by actuation of the thermal output element may be a nonlinear function of time. The user-perceptible temperature decrease generated by actuation of the thermal output element may be a linear function of time, or the user-perceptible temperature decrease generated by actuation of the thermal output element may be a nonlinear function of time. The user-perceptible temperature change generated by actuation of the thermal output element may be 'modulated,' that is, may include a predefined sequence of temperature change that conveys predefined information. Nonlimiting examples of predefined sequences of user-perceptible temperature change include a temperature increase followed by a temperature decrease, a temperature decrease followed by a temperature increase, a first temperature increase followed by a second, distinct temperature increase, or a first temperature decrease followed by a second, distinct temperature decrease.

The present thermal output elements suitably can be used with and included as part of any aerosol-generating system or device, including as part of any peripheral device to such a system. That is, the present thermal output elements need not necessarily be directly coupled to or provided as part of an aerosol-generating element, but may be directly coupled to or provided as part of any suitable device that is an element of an aerosol-generating system or device.

The aerosol-generating system or device can include a gel, liquid, or solid aerosol-forming substrate, and can include a suitably configured aerosol-generating element configured as to generate an aerosol therefrom.

In configurations in which the aerosol-forming substrate comprises a gel or liquid, the aerosol-generating system or device can include a reservoir holding the aerosol-forming substrate, which reservoir optionally may contain a carrier material for holding the aerosol-forming substrate. The carrier material optionally may be or include a foam, a sponge, or a collection of fibres. The carrier material optionally may be formed from a polymer or copolymer. In one embodiment, the carrier material is or includes a spun polymer.

In some configurations, the aerosol-generating system optionally comprises a cartridge and a mouthpiece couplable to the cartridge. The cartridge optionally comprises at least one of the reservoir and the aerosol-generating element. Additionally, or alternatively, the housing of the aerosol-generating system optionally further comprises an air inlet, an air outlet, and an airflow path extending therebetween, wherein the vapour optionally at least partially condenses into an aerosol within the airflow path.

For example, in various configurations provided herein, the cartridge may comprise a housing having a connection end and a mouth end remote from the connection end, the connection end configured to connect to a control body of an aerosol-generating system. The aerosol-generating element may be located fully within the cartridge, or located fully within the control body, or may be partially located within the cartridge and partially located within the control body. Electrical power may be delivered to the aerosol-generating element from the connected control body through the connection end of the housing. In some configurations, the aerosol-generating element optionally is closer to the connection end than to the mouth end opening. This allows for a simple and short electrical connection path between a power source in the control body and the aerosol-generating element.

The aerosol-generating element, which optionally is or includes a heating element, may be substantially planar. The heating element may comprise a resistive material, e.g., a material that generates heat responsive to flow of electrical current therethrough. In one configuration, the heating element comprises one or a plurality of electrically conductive filaments. The term 'filament' refers to an electrical path arranged between two electrical contacts. The heating element may be or include an array of filaments or wires, for example arranged parallel to each other. In some configurations, the filaments or wires may form a mesh. However, it should be appreciated that any suitable configuration and material of the heating element can be used.

For example, the heating element may include or be formed from any material with suitable electrical properties. Suitable materials include but are not limited to: semiconductors such as doped ceramics, electrically 'conductive' ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, constantan, nickel-, cobalt-, chromium-, aluminum-, titanium-, zirconium-, hafnium-, niobium-, molybdenum-, tantalum-, tungsten-, tin-, gallium-, manganese- and iron-containing alloys, and super-alloys based on nickel, iron, cobalt, stainless steel, Timetal^{®}, iron-aluminum based alloys and iron-manganese-aluminum based alloys. Timetal^{®} is a registered trade mark of Titanium Metals Corporation. Exemplary materials are stainless steel and graphite, more preferably 300 series stainless steel like AISI 304, 316, 304L, 316L. Additionally, the heating element may comprise combinations of the above materials. In one nonlimiting configuration, the heating element includes or is made of wire. More preferably, the wire is made of metal, most preferably made of stainless steel. The heater assembly further may comprise electrical contact portions electrically connected to the heating element. The electrical contact portions may be or include two electrically conductive contact pads. In configurations including a housing, the contact portions may exposed through a connection end of the housing to allow for contact with electrical contact pins in a control body.

The reservoir may comprise a reservoir housing. The aerosol-generating element, a heating assembly comprising the aerosol-generating element, or any suitable component thereof may be fixed to the reservoir housing. The reservoir housing may comprise a moulded component or mount, the moulded component or mount being moulded over the aerosol-generating element or the heating assembly. The moulded component or mount may cover all or a portion of the aerosol-generating element or heating assembly and may partially or fully isolate electrical contact portions from one or both of the airflow path and the aerosol-forming substrate. The moulded component or mount may comprise at least one wall forming part of the reservoir housing. The moulded component or mount may define a flow path from the reservoir to the aerosol-generating element.

The housing may be formed form a mouldable plastics material, such as polypropylene (PP) or polyethylene terephthalate (PET). The housing may form a part or all of a wall of the reservoir. The housing and reservoir may be integrally formed. Alternatively the reservoir may be formed separately from the housing and assembled to the housing.

In configurations in which the aerosol-generating system or device includes a cartridge, the cartridge may comprise a removable mouthpiece through which aerosol may be drawn by a user. The removable mouthpiece may cover the mouth end opening. Alternatively the cartridge may be configured to allow a user to draw directly on the mouth end opening.

The cartridge may be refillable with liquid or gel aerosol-forming substrate. Alternatively, the cartridge may be designed to be disposed of when the reservoir becomes empty of liquid or gel aerosol-forming substrate.

In configurations in which the aerosol-generating system or device further includes a control body, the control body may comprise at least one electrical contact element configured to provide an electrical connection to the aerosol-generating element when the control body is connected to the cartridge. The electrical contact element optionally may be elongate. The electrical contact element optionally may be spring-loaded. The electrical contact element optionally may contact an electrical contact pad in the cartridge. Optionally, the control body may comprise a connecting portion for engagement with the connection end of the cartridge. Optionally, the control body may comprise a power supply. Optionally, the control body may comprise control circuitry configured to control a supply of power from the power supply to the aerosol-generating element.

The control circuitry optionally may comprise a microcontroller. The microcontroller is preferably a programmable microcontroller. The control circuitry may comprise further electronic components. The control circuitry may be configured to actuate the present thermal output elements. The control circuitry further may be configured to regulate a supply of power to the aerosol-generating element. Power may be supplied to the aerosol-generating element continuously following activation of the system or may be supplied intermittently, such as on a puff-by-puff basis. The power may be supplied to the aerosol-generating element in the form of pulses of electrical current.

The control body may comprise a power supply arranged to supply power to at least one of the control system, the thermal output element, and the aerosol-generating element. The aerosol-generating element may comprise an independent power supply. The aerosol-generating system or device may comprise a first power supply arranged to supply power to the control circuitry, a second power supply configured to supply power to the aerosol-generating element, and a third power supply configured to supply power to the thermal output element, or may comprise fewer power supplies that respectively are configured to supply power to any suitable combination of the control circuitry, the aerosol-generating element, and the thermal output element.

Each such power supply may be or include a DC power supply. The power supply may be or include a battery. The battery may be or include a lithium based battery, for example a lithium-cobalt, a lithium-iron-phosphate, a lithium titanate or a lithium-polymer battery. The battery may be or include a nickel-metal hydride battery or a nickel cadmium battery. The power supply may be or include another form of charge storage device such as a capacitor. Optionally, the power supply may require recharging and be configured for many cycles of charge and discharge. The power supply may have a capacity that allows for the storage of enough energy for one or more user experiences; for example, the power supply may have sufficient capacity to allow for the continuous generation of aerosol for a period of around six minutes, corresponding to the typical time taken to smoke a conventional cigarette, or for a period that is a multiple of six minutes. In another example, the power supply may have sufficient capacity to allow for a predetermined number of puffs or discrete activations of the heating assembly. Preferably, the power supply further may have sufficient capacity to allow for any suitable number of actuations of the thermal output element.

The aerosol-generating system or device may be or include a handheld aerosol-generating system. The handheld aerosol-generating system may be configured to allow a user to puff on a mouthpiece to draw an aerosol through the mouth end opening. The aerosol-generating system may have a size comparable to a conventional cigar or cigarette. The aerosol-generating system optionally may have a total length between about 30 mm and about 150 mm. The aerosol-generating system may have an external diameter between about 5 mm and about 30mm.

Optionally, the housing may be elongate. The housing may comprise any suitable material or combination of materials. Examples of suitable materials include metals, alloys, plastics or composite materials containing one or more of those materials, or thermoplastics that are suitable for food or pharmaceutical applications, for example polypropylene, polyetheretherketone (PEEK) and polyethylene. The material may be light and non-brittle. The thermal output element can be coupled to any suitable portion of the housing as to generate a user-perceptible temperature change.

The cartridge, control body or aerosol-generating system or device may comprise a puff detector in communication with the control circuitry. The puff detector may be configured to detect when a user draws through the airflow path. Additionally, or alternatively, the cartridge, control body or aerosol-generating system may comprise a temperature sensor in communication with the control circuitry. The cartridge, control body or aerosol-generating system or device may comprise a user input, such as a switch or button. The user input may enable a user to turn the system on and off. Optionally, the user input may be coupled to the thermal output device. Additionally, or alternatively, the cartridge, control body or aerosol-generating system or device optionally may comprise indication means for indicating the determined amount of aerosol-forming substrate held in the reservoir to a user. The control circuitry may be configured to activate the indication means after a determination of the amount of aerosol-forming substrate held in the reservoir has been made. The indication means optionally may comprise one or more of lights, such as light emitting diodes (LEDs), a display, such as an LCD display and audible indication means, such as a loudspeaker or buzzer and vibrating means. The control circuitry may be configured to light one or more of the lights, display an amount on the display, emit sounds via the loudspeaker or buzzer and vibrate the vibrating means.

Preferably, the control circuitry is configured to actuate the thermal output element so as to convey suitable information to the user. For example, the control circuitry optionally may be configured to actuate the thermal output element responsive to one or more of the following: the user turning on the system or device; the user turning off the system or device; the reservoir containing sufficient liquid or gel for a user experience; the reservoir containing insufficient liquid or gel for a user experience; the aerosol-generating element heating up; the aerosol-generating element being sufficiently heated to generate an aerosol; the battery level being low; the battery level being sufficient for a user experience; or indicating any other suitable system status or responsive to any other suitable user input.

The aerosol-forming substrate can have any suitable composition. For example, the aerosol-forming substrate may comprise nicotine. The nicotine containing aerosol-forming substrate may be or include a nicotine salt matrix. The aerosol-forming substrate may comprise plant-based material. The aerosol-forming substrate may comprise tobacco. The aerosol-forming substrate may comprise a tobacco-containing material containing volatile tobacco flavour compounds, which are released from the aerosol-forming substrate upon heating. The aerosol-forming substrate may comprise homogenised tobacco material. The aerosol-forming substrate may comprise a non-tobacco-containing material. The aerosol-forming substrate may comprise homogenised plant-based material.

The aerosol-forming substrate may comprise one or more aerosol-formers. An aerosol-former is any suitable known compound or mixture of compounds that, in use, facilitates formation of a dense and stable aerosol and that is substantially resistant to thermal degradation at the temperature of operation of the system. Examples of suitable aerosol formers include glycerine and propylene glycol. Suitable aerosol-formers are well known in the art and include, but are not limited to: polyhydric alcohols, such as triethylene glycol, 1 ,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. The aerosol-forming substrate may comprise water, solvents, ethanol, plant extracts and natural or artificial flavours. The aerosol-forming substrate may comprise nicotine and at least one aerosol former. The aerosol former may be glycerine or propylene glycol. The aerosol former may comprise both glycerine and propylene glycol. The aerosol-forming substrate may have a nicotine concentration of between about 0.5% and about 10%, for example about 2%.

It should be appreciated that the present thermal output elements are not limited to use with aerosol-generating systems or devices configured for use with liquid or gel aerosol-forming substrates. For example, in other configurations the present thermal output elements can be used with or included in aerosol-generating systems or devices that are configured for use with a solid aerosol-forming substrate. One type of aerosol-generating element that can be used with a solid-aerosol forming substrate includes a heater configured to be inserted into a solid aerosol-forming substrate, such as a plug of tobacco.

In some configurations, the heater is substantially blade-shaped for insertion into the aerosol-forming substrate and optionally has a length of between 10 mm and 60 mm, a width of between 2 mm and 10 mm, and a thickness of between 0.2 mm and 1 mm. A preferred length may be between 15 mm and 50 mm, for example between 18 mm and 30 mm. A preferred length may be about 19 mm or about 20 mm. A preferred width may be between 3 mm and 7 mm, for example between 4 mm and 6 mm. A preferred width may be about 5 mm. A preferred thickness may be between 0.25 mm and 0.5 mm. A preferred thickness may be about 0.4 mm. The heater can include an electrically-insulating heater substrate and an electrically-resistive heating element supported by the heater substrate. A through-hole optionally may be defined through the thickness of the heater. The heater mount may provide structural support to the heater and may allow the heater to be located within the aerosol-generating device. The heater mount optionally may be formed from a mouldable material that is moulded around a portion of the heater and may extend through the though-hole to couple to the heater to the heater mount. The heater optionally may have a tapered or pointed end to facilitate insertion into an aerosol-forming substrate.

The heater mount is preferably moulded to a portion of the heater that does not significantly increase in temperature during operation. Such a portion may be termed a holding portion and the heating element may have lower resistivity at this portion so that it does not heat up to a significant degree on the passage of an operational current. The through-hole may be located in the holding portion. The through-hole, if provided, may be formed in the heater before or after the electrically-resistive heating element is formed on the heater substrate. A device may be formed by fixing or coupling a heating assembly to, or within, a housing. The through-hole may be formed by machining, for example by laser machining or by drilling.

The heater mount may provide structural support to the heater and allows it to be securely fixed within an aerosol-generating device. The use of a mouldable material such as a mouldable polymer allows the heater mount to be moulded around the heater and thereby firmly hold the heater. It also allows the heater mount to be produced with a desired external shape and dimensions in an inexpensive manner.

Advantageously, the heating element may be formed from different materials. A first part, or heating part, of the heating element (i.e. that portion supported by the insertion or heating portion of the heater) may be formed from a first material and a holding part of the heating element (i.e. that part supported by a holding portion of the heater) may be formed from a second material, wherein the first material has a greater electrical resistivity coefficient than the second material. For example, the first material may be Ni-Cr (Nickel-Chromium), platinum, tungsten or alloy wire and the second material may be gold or silver or copper. The dimensions of the first and second parts of the heating element may also differ to provide for a lower electrical resistance per unit length in the second portion.

The heater substrate is formed from an electrically insulating material and may be a ceramic material such as Zirconia or Alumina. The heater substrate may provide a mechanically stable support for the heating element over a wide range of temperatures and may provide a rigid structure suitable for insertion into an aerosol-forming substrate. The heater substrate comprises a planar surface on which the heating element is positioned and may comprise a tapered end configured to allow for insertion into an aerosol-forming substrate. The heater substrate advantageously has a thermal conductivity of less than or equal to 2 Watts per metre Kelvin.

The aerosol-generating device preferably comprises a housing defining a cavity surrounding an insertion portion of the heater. The cavity is configured to receive an aerosol-forming article containing an aerosol-forming substrate. The heater mount may form a surface closing one end of the cavity.

In some configurations, the device is preferably a portable or handheld device that is comfortable to hold between the fingers of a single hand.

The power supply of the device may be any suitable power supply, for example a DC voltage source such as a battery. In one embodiment, the power supply is a Lithium-ion battery. Alternatively, the power supply may be a Nickel-metal hydride battery, a Nickel cadmium battery, or a Lithium based battery, for example a Lithium-Cobalt, a Lithium-Iron-Phosphate, Lithium Titanate or a Lithium-Polymer battery.

The device preferably comprises a control element. The control element may be a simple switch. Alternatively the control element may be electric circuitry and may comprise one or more microprocessors or microcontrollers, which may be configured to control the heater as well as the thermal output element.

The disclosure provides an aerosol-generating system comprising an aerosol-generating device as described above and one or more aerosol-forming articles configured to be received in a cavity of the aerosol-generating device.

During a usage session, an aerosol-generating article containing the aerosol-forming substrate may be partially contained within the aerosol-generating device. The aerosol-generating article may be substantially cylindrical in shape. The aerosol-generating article may be substantially elongate. The aerosol-generating article may have a length and a circumference substantially perpendicular to the length. The aerosol-forming substrate may be substantially cylindrical in shape. The aerosol-forming substrate may be substantially elongate. The aerosol-forming substrate may also have a length and a circumference substantially perpendicular to the length. The aerosol-generating article may have a total length between approximately 30 mm and approximately 100 mm. The aerosol-generating article may have an external diameter between approximately 5 mm and approximately 12 mm.

The solid aerosol-forming substrate may comprise a tobacco-containing material containing volatile tobacco flavour compounds which are released from the substrate upon heating. Alternatively, the solid aerosol-forming substrate may comprise a non-tobacco material. The solid aerosol-forming substrate may further comprise an aerosol former that facilitates the formation of a dense and stable aerosol. Examples of suitable aerosol formers are glycerine and propylene glycol.

The solid aerosol-forming substrate may comprise, for example, one or more of: powder, granules, pellets, shreds, spaghettis, strips or sheets containing one or more of: herb leaf, tobacco leaf, fragments of tobacco ribs, reconstituted tobacco, homogenised tobacco, extruded tobacco, cast leaf tobacco and expanded tobacco. The solid aerosol-forming substrate may be in loose form, or may be provided in a suitable container or cartridge. Optionally, the solid aerosol-forming substrate may contain additional tobacco or non-tobacco volatile flavour compounds, to be released upon heating of the substrate. The solid aerosol-forming substrate may also contain capsules that, for example, include the additional tobacco or non-tobacco volatile flavour compounds and such capsules may melt during heating of the solid aerosol-forming substrate.

As used herein, homogenised tobacco refers to material formed by agglomerating particulate tobacco. Homogenised tobacco may be in the form of a sheet. Homogenised tobacco material may have an aerosol-former content of greater than 5% on a dry weight basis. Homogenised tobacco material may alternatively have an aerosol former content of between 5% and 30% by weight on a dry weight basis. Sheets of homogenised tobacco material may be formed by agglomerating particulate tobacco obtained by grinding or otherwise combining one or both of tobacco leaf lamina and tobacco leaf stems. Alternatively, or in addition, sheets of homogenised tobacco material may comprise one or more of tobacco dust, tobacco fines and other particulate tobacco by-products formed during, for example, the treating, handling and shipping of tobacco. Sheets of homogenised tobacco material may comprise one or more intrinsic binders, that is tobacco endogenous binders, one or more extrinsic binders, that is tobacco exogenous binders, or a combination thereof to help agglomerate the particulate tobacco; alternatively, or in addition, sheets of homogenised tobacco material may comprise other additives including, but not limited to, tobacco and non-tobacco fibres, aerosol-formers, humectants, plasticisers, flavourants, fillers, aqueous and non-aqueous solvents and combinations thereof.

Optionally, the solid aerosol-forming substrate may be provided on or embedded in a thermally stable carrier. The carrier may take the form of powder, granules, pellets, shreds, spaghettis, strips or sheets. Alternatively, the carrier may be a tubular carrier having a thin layer of the solid substrate deposited on its inner surface, or on its outer surface, or on both its inner and outer surfaces. Such a tubular carrier may be formed of, for example, a paper, or paper like material, a non-woven carbon fibre mat, a low mass open mesh metallic screen, or a perforated metallic foil or any other thermally stable polymer matrix.

In some configurations, the aerosol-forming substrate comprises a gathered crimpled sheet of homogenised tobacco material. As used herein, the term 'crimped sheet' denotes a sheet having a plurality of substantially parallel ridges or corrugations. Preferably, when the aerosol-generating article has been assembled, the substantially parallel ridges or corrugations extend along or parallel to the longitudinal axis of the aerosol-generating article. This advantageously facilitates gathering of the crimped sheet of homogenised tobacco material to form the aerosol-forming substrate. However, it will be appreciated that crimped sheets of homogenised tobacco material for inclusion in the aerosol-generating article may alternatively or in addition have a plurality of substantially parallel ridges or corrugations that are disposed at an acute or obtuse angle to the longitudinal axis of the aerosol-generating article when the aerosol-generating article has been assembled. In certain embodiments, the aerosol-forming substrate may comprise a gathered sheet of homogenised tobacco material that is substantially evenly textured over substantially its entire surface. For example, the aerosol-forming substrate may comprise a gathered crimped sheet of homogenised tobacco material comprising a plurality of substantially parallel ridges or corrugations that are substantially evenly spaced-apart across the width of the sheet.

The solid aerosol-forming substrate may be deposited on the surface of the carrier in the form of, for example, a sheet, foam, gel or slurry. The solid aerosol-forming substrate may be deposited on the entire surface of the carrier, or alternatively, may be deposited in a pattern in order to provide a non-uniform flavour delivery during use.

It should be appreciated that although certain configurations described herein include aerosol-generating elements that generate aerosols via resistive heating, any suitable aerosol-generating element can be used, for example an inductive heating arrangement.

In a second embodiment of the invention, there is provided a method for generating an output in an aerosol-generating device. Optionally, the aerosol-generating device comprises a housing comprising an air inlet, an air outlet, an airflow path extending therebetween, and an aerosol-generating element disposed within the housing and configured to generate an aerosol. The method can include providing a thermal output element coupled to the housing, the thermal output element being distinct from the aerosol-generating element. The method further can include providing a circuit coupled to the thermal output element. The method further can include causing, by the circuit, the thermal output element to generate a user-perceptible temperature change.

Features of the aerosol-generating device of the first embodiment of the invention may be applied to the second embodiment of the invention.

Configurations of the invention will now be described in detail, by way of example only, with reference to the accompanying drawings, in which:
Figure 1 is a schematic illustration of a cross-section of an aerosol-generating system including an interface in accordance with the invention;
Figure 2 is a schematic illustration of a cross-section of another aerosol-generating system including an interface in accordance with the invention;
Figure 3A is a schematic illustration of a cross-section of an exemplary interface, in accordance with the invention;
Figure 3B is a schematic illustration of a cross-section of an aerosol-generating system including the exemplary interface of Figure 3A in accordance with the invention;
Figure 3C is a schematic illustration of an exemplary use of the aerosol-generating system of Figure 3B including the exemplary interface of Figure 3A in accordance with the invention;
Figures 4A-4F are schematic illustrations of cross sections of interfaces including various exemplary thermal output elements for generating a user-perceptible temperature change, in accordance with the invention;
Figures 5A-5B are schematic illustrations of cross sections of exemplary interfaces with integrated user-actuatable input elements and thermal output elements, in accordance with the invention;
Figures 6A-6D are schematic illustrations of exemplary devices including interfaces, in accordance with the invention; and
Figure 7 illustrates a flow of operations in an exemplary method, in accordance with the invention.

Configurations provided herein relate to an improved interface for an aerosol-generating system. The interface preferably includes a thermal output element that generates a user-perceptible temperature change for conveying information. Optionally, the interface further can include an input element. Optionally, the interface, e.g., thermal output element, has a clearly recognizable shape so that if the interface is included on multiple devices or versions of the present aerosol-generating system, the user can recognise the interface element. Additionally, or alternatively, the interface, e.g., thermal output element, optionally may be associated with one or more consistent, specific functions on the aerosol-generating system, such that after the user becomes familiar with the functionality of the interface, the user will immediately know the function of the interface on any other system or device which includes such an interface. Additionally, or alternatively, the present interface, e.g., thermal output element, optionally can include consistent components both in the aerosol-generating system and in any other systems and devices, such that after the user becomes familiar with the feel and interpretation of the interface, the user will immediately know how to interpret the interface on any other system or device which includes such an interface.

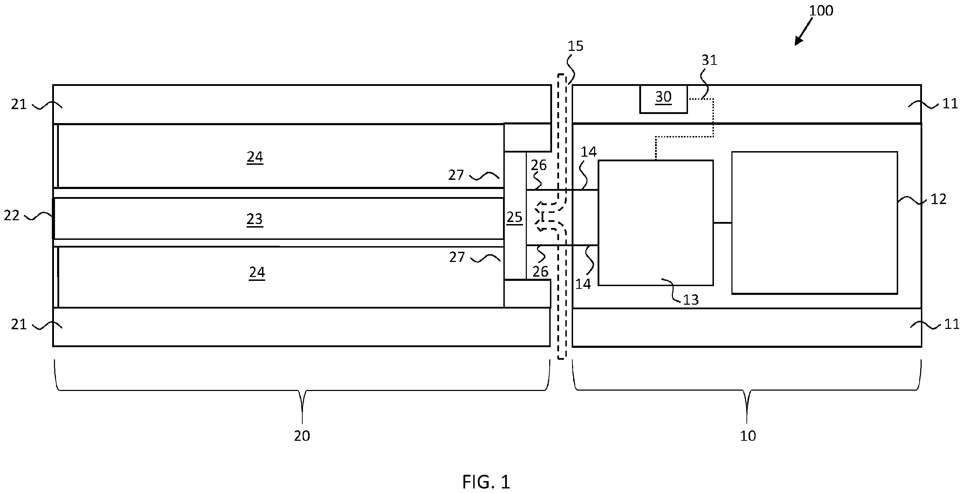

The present output elements may be used in any suitable aerosol-generating system or device therein. For example, Figure 1 is a schematic illustration of an aerosol-generating system 100 including an interface element 30 in accordance with the invention. The system 100 comprises two main components, a cartridge 20 containing a liquid or gel aerosol-forming substrate, and a control body 10. A connection end of the cartridge 20 is removably connected to a corresponding connection end of the control body 10. The control body 10 includes housing 11, disposed within which is a battery 12, which in one example is a rechargeable lithium ion battery, control circuitry 13, and interface element 30 coupled to control circuitry 13 via electrical interconnect 31. The aerosol-generating system 100 is portable and can have a size comparable to a conventional cigar or cigarette. For example, system 100 preferably is sized and shaped so as to be handheld, and preferably sized and shaped so as to be holdable in one hand, e.g., between a user's fingers.

The cartridge 20 comprises a housing 21 containing a heating assembly 25 and a reservoir 24. A liquid or gel aerosol-forming substrate is held in the reservoir 24. The upper portion of reservoir 24 is connected to the lower portion of the reservoir 24 illustrated in Figure 1. The heating assembly 25 receives substrate from reservoir 24 and heats the substrate to generate a vapour, e.g., includes a resistive heating element coupled to controller 13 via electrical interconnects 26, 14 so as to receive power from battery 12. One side of heating assembly 25 is in fluidic communication with reservoir 24 (for example, via fluidic channels 27) so as to receive the aerosol-forming substrate from reservoir 24, e.g., by capillary action. The heating assembly 25 is configured to heat the aerosol-forming substrate to generate a vapour.

In the illustrated configuration, an air flow path 23 extends through the cartridge 20 from air inlet 15 (optionally which may be between control body 10 and cartridge 20), past the heating assembly 25, and through a path 23 through reservoir 24 to a mouth end opening 22 in the cartridge housing 21. The system 100 is configured so that a user can puff on the mouth end opening 22 of the cartridge 20 to draw aerosol into their mouth. In operation, when a user puffs on the mouth end opening 22, air is drawn into and through the airflow path 23 from the air inlet 15 and past the heating assembly 25 as illustrated in dashed arrows in Figure 1, and to the mouth end opening 22. The control circuitry 13 controls the supply of electrical power from the battery 12 to the cartridge 20 via electrical interconnects 14 (in control body 10) coupled to electrical interconnects 26 (in cartridge 20) when the system is activated. This in turn controls the amount and properties of the vapour produced by the heating assembly 25. The control circuitry 13 may include an airflow sensor (not specifically illustrated) and the control circuitry may 13 supply electrical power to the heating assembly 25 when the user puffs on the cartridge 20 as detected by the airflow sensor. This type of control arrangement is well established in aerosol-generating systems such as inhalers and e-cigarettes. When a user puffs on the mouth end opening 22 of the cartridge 20, the heating assembly 25 is activated and generates a vapour that is entrained in the air flow passing through the air flow path 23. Optionally, the vapour at least partially cools within the airflow path 23 to form an aerosol within the airflow path, which is then drawn into the user's mouth through the mouth end opening 22. In some configurations, the vapour at least partially cools within the user's mouth to form an aerosol within the user's mouth.

Interface element 30 illustrated in Figure 1 includes a thermal output element configured to generate a user-perceptible temperature change responsive to actuation by control circuitry 13 via electrical interconnect 31. The thermal output element can be configured, for example, so as to generate at least one temperature change (e.g., heating, or cooling, or heating and cooling sequentially) at interface element 30 or at a defined outer portion of housing 11 in such a manner that a user can perceive the temperature change, typically through the user's sense of touch. For example, in some configurations, the thermal output element may be selected from the group consisting of a thermoelectric device, a resistive member, an inductive member, and an infrared source. It should be appreciated that interface element 30 may be located at any suitable portion of aerosol-generating system 100 and is not limited to generating the user-perceptible temperature change only at an outer portion of housing 11 or other portion of control body 10. For example, interface element 30 can be located at any suitable location of control body 10 or cartridge 20, e.g., can be coupled to any suitable portion of housing 11 or housing 21 so as to generate a user-perceptible temperature change at any suitable outer portion of system 100, e.g., any suitable portion of system 100 that may be touched by the user's lip, finger, or palm during use.

In some configurations, aerosol-generating system 100 further comprises an input element configured to generate an input signal. Circuit 13 can be configured to cause the thermal output element to generate the user-perceptible temperature change responsive to the input signal. Optionally, the input element is user-actuatable. In one non-limiting configuration, the thermal output element optionally is located sufficiently close to the input element that the user can perceive the temperature change while or after actuating the input element. As a further option, the input element and the thermal output element are arranged in a stack. Additionally, or alternatively, the input element optionally is selected from the group consisting of a mechanical button, a membrane button, a mechanical switch, a rotary encoder, a dial, a knob, a capacitive touch button, a resistive touch button, a joystick, a slider, a trigger button, a touch screen, and a magnetic switch. As another alternative, the input signal corresponds to a condition of the aerosol-generating device, e.g., need not necessarily be generated directly responsive to actuation of an input element. Additionally, or alternatively, system 100 optionally further includes a sensor coupled to the circuit 13 and configured to output to the circuit a temperature of the thermal output element of interface 30. The circuit 13 optionally is configured to adjust operation of the thermal output element or to terminate operation of the thermal output element based on the temperature received from the sensor.

In some configurations, an aerosol-generating system 100 comprises an aerosol-generating device such as described herein, and a peripheral device in operable communication with the aerosol-generating device (not specifically illustrated in Figure 1). The peripheral device optionally is configured to transmit to the aerosol-generating device a signal corresponding to a condition of the aerosol-generating device. The circuit optionally is configured to cause the output element to generate the user-perceptible temperature change responsive to receipt of the signal. In nonlimiting configurations, the peripheral device optionally comprises a device charger, charging case, consumable holder, smartphone, tablet computer, personal computer, or vending machine.

In some configurations, the circuit determines a status of the device, and the user-perceptible temperature change indicates the status of the device.

In some configurations, an aerosol-generating system comprises an aerosol-generating device such as described herein and an aerosol-forming substrate, optionally wherein the aerosol-forming substrate comprises nicotine.

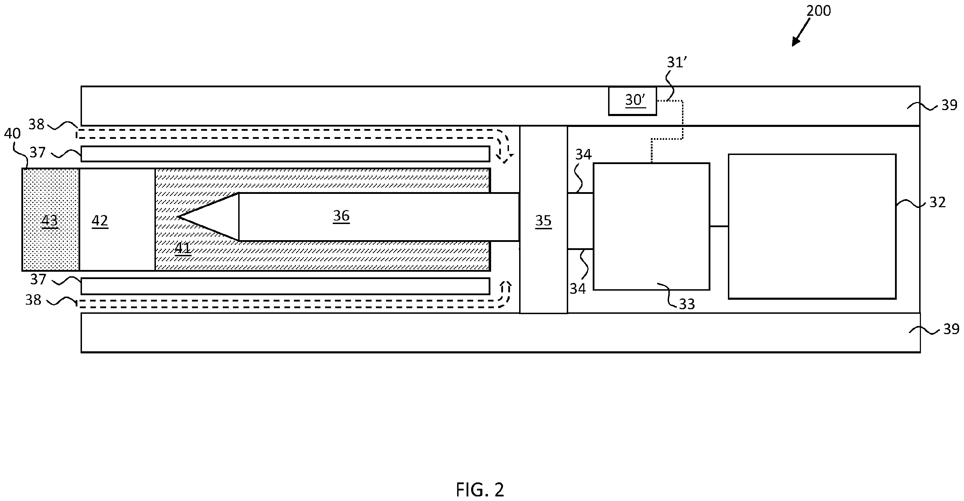

Figure 2 is a schematic illustration of an alternative aerosol-generating system 200 including interface element 30' in accordance with the invention. Interface element 30' can include a thermal output element and can be configured similarly as interface 30 described with reference to Figure 1. The system 200 comprises an aerosol-generating device having a housing 39, and an aerosol-forming article 40, for example a tobacco stick. The aerosol-forming article 40 includes an aerosol-forming substrate 41 that is pushed inside the housing 39 to come into thermal proximity with a portion of a heater 36. Responsive to heating by heater 36, the aerosol-forming substrate 41 will release a range of volatile compounds at different temperatures.

Within the housing 39 there is an electrical energy supply 32, for example a rechargeable lithium ion battery. A controller 33 is connected to the heater 36 via electrical interconnects 34, to the electrical energy supply 32, and to interface 30' via electrical interconnect 31'. The controller 33 controls the power supplied to the heater 36 in order to regulate its temperature, and actuates interface 30' in a manner such as described elsewhere herein. Typically the aerosol-forming substrate is heated to a temperature of between 250 and 450 degrees centigrade.

The housing 39 of aerosol-generating device defines a cavity, open at the proximal end (or mouth end), for receiving an aerosol-generating article 40 for consumption. Optionally, system 200 includes element(s) 37 disposed within the cavity which, together with housing 39, form(s) air inlet channels 38. The distal end of the cavity is spanned by a heating assembly comprising heater 36 and a heater mount 35. The heater 36 is retained by the heater mount 35 such that an active heating area (heating portion) of the heater 36 is located within the cavity. In one example, the heater 36 includes a through hole (not specifically illustrated) through which material of heater mount 35 extends so as to further secure heater 36 in place. The active heating area of the heater 36 is positioned within a distal end of the aerosol-generating article 40 when the aerosol-generating article 40 is fully received within the cavity. The heater mount 35 optionally may be formed from polyether ether ketone and may be moulded around a holding portion of the heater. The heater 36 optionally is shaped in the form of a blade terminating in a point. That is, the heater 36 optionally has a length dimension that is greater than its width dimension, which is greater than its thickness dimension. First and second faces of the heater 36 may be defined by the width and length of the heater.

An exemplary aerosol-forming article 40, as illustrated in Figure 2, can be described as follows. The aerosol-generating article 40 comprises three or more elements: an aerosol-forming substrate 41, an intermediate element 42, and a mouthpiece filter 43. These elements may be arranged sequentially and in coaxial alignment and assembled by a cigarette paper (not specifically illustrated) to form a rod. In one nonlimiting configuration, when assembled, the aerosol-forming article 40 may be 45 millimetres long and have a diameter of 7 millimetres, although it should be appreciated that any other suitable combination of dimensions can be used.

The aerosol-forming substrate 41 optionally comprises a bundle of crimped cast-leaf tobacco wrapped in a filter paper (not shown) to form a plug. The cast-leaf tobacco includes one or more aerosol formers, such as glycerine. The intermediate element 42 may be located immediately adjacent the aerosol-forming substrate 41 The intermediate element 42 may be configured so as to locate the aerosol-forming substrate 41 towards the distal end of the article 40 so that it can be contacted with the heater 36. Additionally, or alternatively, the intermediate element 42 may be configured so as to inhibit or prevent the aerosol-forming substrate 41 from being forced along the article 40 towards the mouthpiece when heater 36 is inserted into the aerosol-forming substrate 41. Additionally, or alternatively, the intermediate element 42 may be configured so as to allow volatile substances released from the aerosol-forming substrate 41 to pass along the article towards the mouthpiece filter 43. The volatile substances may cool within the transfer section to form an aerosol. In one nonlimiting configuration, intermediate element 42 may include or may be formed from a tube of cellulose acetate directly coupled to the aerosol-forming substrate. In one nonlimiting configuration, the tube defines an aperture having a diameter of 3 millimetres. Additionally, or alternatively, intermediate element 42 may include or be formed from a thin-walled tube of 18 millimetres in length directly coupled to the mouthpiece filter 43. In one exemplary configuration, intermediate element 42 includes both such tubes. The mouthpiece filter 43 may be a conventional mouthpiece filter, e.g., formed from cellulose acetate, and having a length of approximately 7.5 millimetres. Elements 41, 42, and 43 optionally are assembled by being tightly wrapped within a cigarette paper (not specifically illustrated), e.g., a standard (conventional) cigarette paper having standard properties or classification. The paper in this specific embodiment is a conventional cigarette paper. The interface between the paper and each of the elements 41, 42, 43 locates the elements and defines the aerosol-forming article 40.

As the aerosol-generating article 40 is pushed into the cavity, the tapered point of the heater 36 engages with the aerosol-forming substrate 41. By applying a force to the aerosol-forming article 40, the heater 36 penetrates into the aerosol-forming substrate 41. When the aerosol-forming article 40 is properly engaged, the heater 36 is inserted into the aerosol-forming substrate 41. When the heater 36 is actuated, the aerosol-forming substrate 41 is warmed and volatile substances are generated or evolved. As a user draws on the mouthpiece filter 43, air is drawn into the aerosol-forming article 40 via air inlet channels 38 and the volatile substances condense to form an inhalable aerosol. This aerosol passes through the mouthpiece filter 43 of the aerosol-forming article 40 and into the user's mouth.

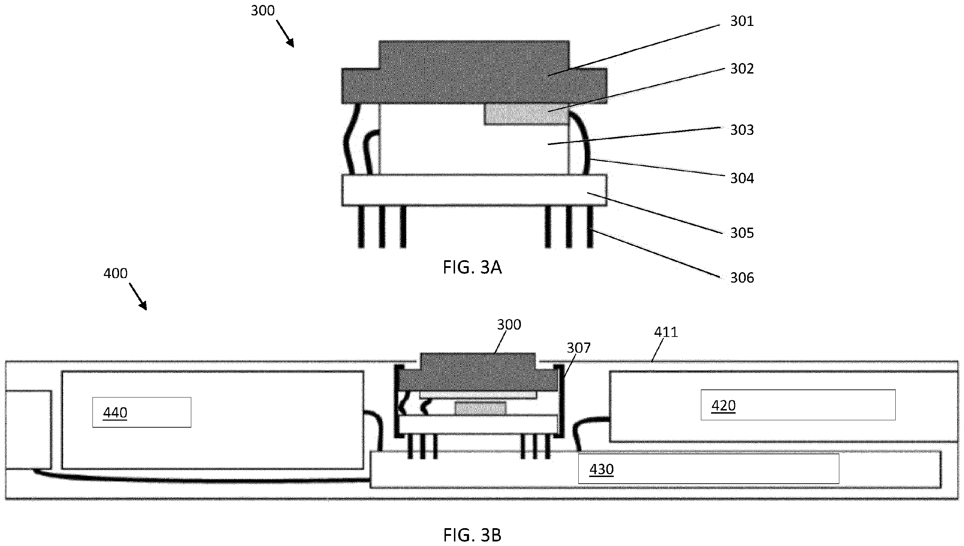

Further exemplary configurations of the present interfaces are described with reference to Figures 3A-3C, 4A-4F, and 5A-5B.

Figure 3A is a schematic illustration of a cross-section of an exemplary interface 300 that can be implemented as interface 30 illustrated in Figure 1 or interface 30' illustrated in Figure 2. Interface 300 illustrated in Figure 3A can include user-actuatable input element 301, sensor 302, thermal output element 303, suitable electrical connections 304 between elements of interface 300, logic circuit 305, and connections 306 to other elements of an aerosol-generating device or system such as system 100 illustrated in Figure 1 or system 200 illustrated in Figure 2. Optionally, input element 301 may be stacked on top of and coupled to one or more of sensor(s) 302, thermal output element 303, logic circuit 305, and connections 306 so as to provide an integrated interface element that may be incorporated into various types of devices in a consistent and relatively straightforward manner. For example, Figure 3B is a schematic illustration of a cross-section of an aerosol-generating system 400 including the exemplary interface 300 of Figure 3A. Interface 300 may include housing 307 configured so as to securably couple other elements of interface 300 to one another such that interface 300 may be handled and installed as a single element. In simplified system 400, housing 307 of interface 300 may be coupled to housing 411 such that input element 301 is user-actuatable via an aperture through the housing 411, and optionally at a height which is higher than that of housing 411. The connections 306 of interface 300 may be coupled to control circuitry 430, for example so that control circuitry 430 may control operation of logic circuit 305 and provide power from battery 440 to power logic circuit 305, input element 301, and thermal output element 303. In some configurations, connections 306 may include one or multiple pins that can be coupled, e.g., soldered, to a printed circuit board or other suitable components of system 400. In other configurations, connections 306 may include a cable with a connector that plugs into a printed circuit board or other suitable components of system 400.

Housing 307 may include one or multiple structures configured to hold together the other elements of interface 300. Examples of structures that can form or be included in housing 307 include any suitable combination of a plastic case into which the other elements of interface 300 fit, fasteners such as screws or clamps that secure together the other elements of interface 300, a cured resin fully or partially surrounding other elements of interface 300, a visual feedback element such as a light emitting diode which optionally can be multi-coloured, and an audio feedback element such as a speaker, beeper, or buzzer.

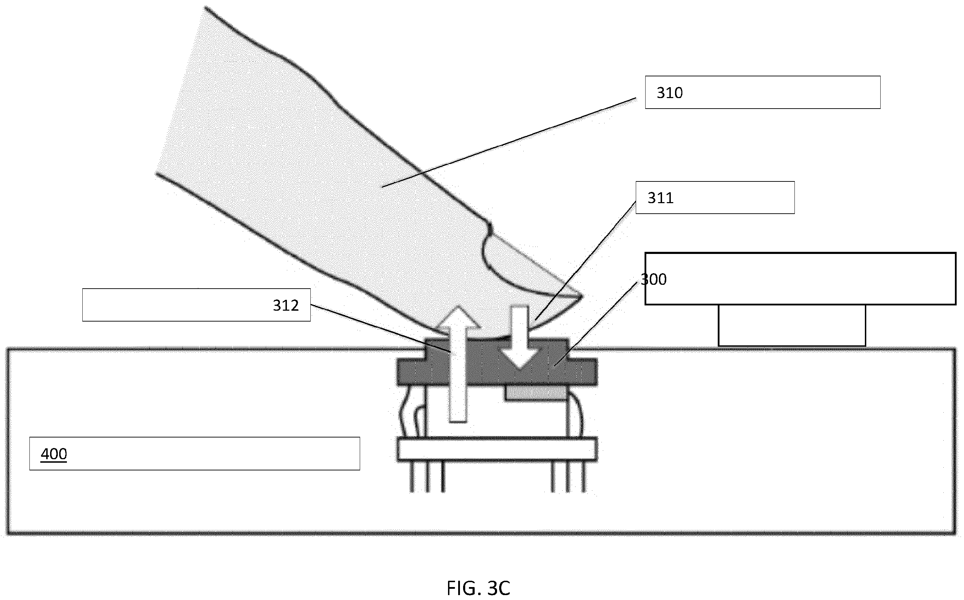

Figure 3C is a schematic illustration of an exemplary use of the aerosol-generating system 400 of Figure 3B including the exemplary interface 300 of Figure 3A. The user, using his or her finger 310, can provide input 311 actuating input element 301 of interface 300, e.g., by touching or depressing the input element. Responsive to such actuation, logic circuit 305 generates an input signal and transmits the input signal to control circuitry 430 of system 400 via connections 306. Responsive to receiving the input signal, control circuitry 430 actuates thermal output element 303, e.g., by transmitting an output signal to logic circuit 305 via connections 306. Responsive to receiving such output signal, logic circuit 305 causes thermal output element 303 to generate a user-perceptible temperature change 312. Because thermal output element 303 is sufficiently close to user-actuatable input element 301 (e.g., stacked under input element 301), the user can perceive the temperature change while or after actuating the input element.

It should be appreciated that elements of interface 300 can have any suitable arrangement relative to one another and to elements of aerosol-generating system 400, and are not limited to the particular arrangement illustrated in Figures 3A-3C. For example, in the nonlimiting configuration illustrated in Figures 3A-3C, the thermal output element 303 is partially or fully located below (behind) user-actuatable input element 301 and in direct or indirect contact and thermal communication with user-actuatable input element 301 so as to readily transfer heat or cooling to element 301 and thereby make the temperature change readily perceivable to the user. Alternatively, the user-actuatable input element 301 may be arranged so as to be accessible from one or more other sides of interface 300 and the connections 306 may be arranged so as to be accessible from one or more other sides of interface 300. In still other configurations, the thermal output element 303 can be partially or fully located above (over) user-actuatable input element 301 or at any other suitable location within interface 300 so as to be directly contactable by the user and thereby make the temperature change readily perceivable to the user. The user-actuatable input element 301 may be arranged so as to be accessible through thermal output element 303, and the connections 306 may be arranged so as to be accessible from one or more other sides of interface 300. Alternatively, the user-actuatable input element 301 and thermal output element 303 may be accessible from the same side as one another, e.g., arranged directly or indirectly next to each other, rather than stacked.

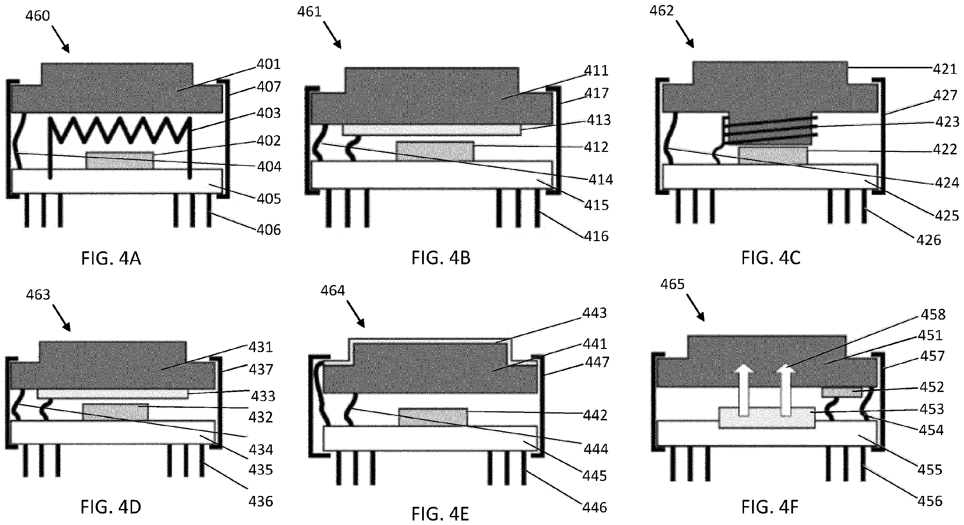

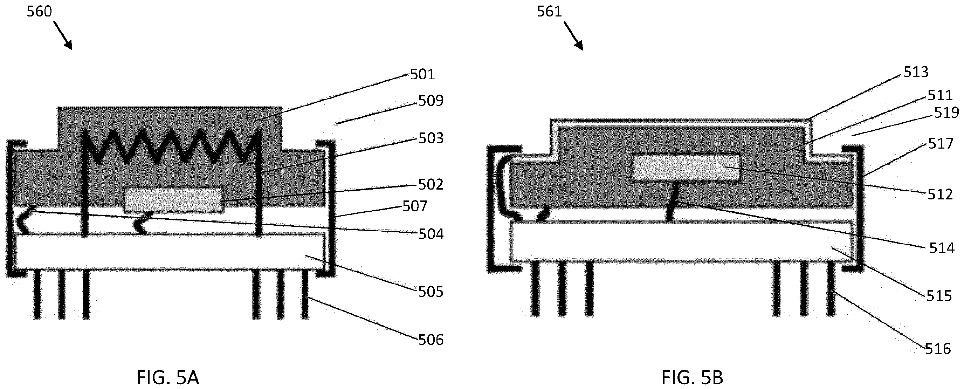

In other nonlimiting examples, thermal output element 303 and user-actuatable input element 301 may be fully or partially integrated with one another, such as a resistive heating wire (thermal output element) embedded in a button (user-actuatable input element), or a resistive coating (thermal output element) disposed on the surface of a button (user-actuatable input element). Optionally, thermal output element 303 and sensor 302 can be fully or partially integrated with user-actuatable input element 301, e.g., a resistive heating coil (thermal output element) and temperature sensor both can be fully or partially integrated into a button (user-actuatable input element). In still other configurations, the thermal output element 303 and sensor 302 can be the same structure; for example, the resistance of a resistive member can indicate the temperature of the resistive member, obviating the need for a separate sensor 302. Some exemplary configurations are described with reference to Figures 4A-4F and 5A-5B, and others may be readily envisioned based on the teachings provided herein. Indeed, thermal output element 303 can have any suitable location within the present systems and devices, e.g., can be spaced apart from user-actuatable input element 301, for example on the opposite side of interface 300 or even on another portion of the system or device.

Furthermore, it should be appreciated that thermal output element 303 can be actuated responsive to input signals that are generated responsive to any suitable condition or status of system 400 or any suitable user action, and the input signals need not necessarily be generated by interface element 300. For example, the input signal received by control circuitry 430 can correspond to a condition of the aerosol-generating system 400. Purely by way of example, control circuitry 430 can be in operable communication with battery 440 and configured to detect a condition of battery 440. For example, control circuitry 430 can be configured to detect the level of charge storage by battery 440 and to compare such level to one or more thresholds. The level being determined to be above a first threshold (e.g., indicating a 'full' battery) can correspond to a first input signal to the control circuitry 430, responsive to which the control circuitry can transmit a first output signal to logic circuit 305 of interface 300 causing actuation of thermal output element 303 communicating the `full' battery status to the user. The level being determined to be below a second threshold (e.g., indicating an 'empty' battery) can correspond to a second input signal to the control circuitry 430, responsive to which the control circuitry can transmit a second output signal to logic circuit 305 of interface 300 causing actuation of thermal output element 303 communicating the 'empty' battery status to the user. Control circuitry 430 optionally is configured so as to modulate thermal output element 303 so as to convey both such conditions to the user at different times than one another, e.g., by using a decreasing temperature to convey 'empty' battery status and an increasing temperature to convey 'full' battery status.

As another example, control circuitry 430 can be configured to detect the level of heating by aerosol-generating element 420 and to compare such level to one or more thresholds. The level being determined to be above a third threshold (e.g., indicating a 'ready' status of the aerosol-generating element) can correspond to a third input signal to the control circuitry 430, responsive to which the control circuitry can transmit a third output signal to logic circuit 305 of interface 300 causing actuation of thermal output element 303 communicating the 'ready' status to the user. The level being determined to be below a second threshold (e.g., indicating a `not ready' status of the aerosol-generating element) can correspond to a fourth input signal to the control circuitry 430, responsive to which the control circuitry can transmit a fourth output signal to logic circuit 305 of interface 300 causing actuation of thermal output element 303 communicating the 'not ready' status to the user. Control circuitry 430 optionally is configured so as to modulate thermal output element 303 so as to convey both such conditions to the user at different times than one another, e.g., by using a decreasing temperature to convey 'not ready' status and an increasing temperature to convey 'ready' status. Additionally, control circuitry 430 optionally is configured such that modulations corresponding to the status of battery 440 are different from modulations corresponding to readiness of the aerosol-generating element 420, thus facilitating use of interface 300 to communicate different types of information to the user.

Although Figures 3A-3C illustrate particular configurations of an interface 300, it should be appreciated that any suitable configuration can be used. For example, in embodiments that include a user-actuatable input element 301, such element optionally can be one of, or can include any suitable combination of, a mechanical button, a mechanical switch, a rotary encoder, a dial, a knob, a capacitive touch button, a resistive touch button, a joystick, a slider, or a trigger button. Or, for example, the user-actuatable input element 301 optionally can be one of, or can include any suitable combination of, a touch screen or a magnetic switch. In optional configurations in which the interface 300 includes multiple user-actuatable input elements 301, optionally all of such elements are located on the same side of interface 300 as one another. Additionally, or alternatively, the user-actuatable interface element(s) 301 optionally can be configured at one of the outer sides of interface 300 (at a peripheral surface of interface 300) so that the element(s) can remain easily accessible by a user after the interface has been installed in a device. However, it should be appreciated that in some configurations one or more the user-actuatable interface element(s) may be inaccessible from any of the sides of the interface 300. In various optional configurations of interface 300, one or multiple thermal output elements 303 can be connected to logic circuit 305 so as to be actuated through one or multiple input signals which respectively can be generated responsive to actuation of the user-actuatable input element(s) 301 or can be generated responsive to one or more conditions of the aerosol-generating device or system of which the interface 300 is a part.

Optional sensor 302 can include one or multiple sensors optionally implemented in a feedback loop, for example by logic circuit 305 or by control circuitry 430, to control the temperature change generated by thermal output element 303. For example, sensor 302 can be used as an integrated safety feature which limits the maximum temperature generated by the thermal output element 303. Illustratively, sensor 302 can be coupled so as to output to logic circuit 305 or control circuitry 430 a signal corresponding to the temperature of the thermal output element 303, and logic circuit 305 or control circuitry 430 can be configured so as to adjust operation of the thermal output element (e.g., reduce heating by the thermal output element) or to terminate operation of the thermal output element based upon the signal corresponding to a temperature that exceeds a predetermined threshold.

Additionally, or alternatively, optional sensor 302 and logic circuit 305 or control circuitry 430 can be configured so as to determine whether a user has touched interface 300 for a certain amount of time, even if the user-actuatable input element 301 has not been actuated. For example, regardless of whether the user-actuatable input element 301 has not been actuated, sensor 302 can provide to logic circuit 305 or to control circuitry 430 a signal corresponding to a temperature of sensor 302, which can correspond to a temperature of user-actuatable input element 301. Prior to contact with a finger or palm of a user, user-actuatable input element 301 can have a first temperature, e.g., ambient (room) temperature, or a temperature that is different than ambient because of heat transferred from the aerosol-generating element or because of heat or cooling generated by thermal output element 303, responsive to which sensor 302 may output a signal having a value corresponding to such temperature. Responsive to contact with the finger or palm of a user who is touching interface 300, e.g., who is touching user-actuatable element 301, the temperature of sensor 302 may increase or decrease to a second temperature, causing the value of the signal generated by sensor 300 to change correspondingly. Based on such changes in the value of the signal that sensor 302 generates, logic circuit 305 or control circuitry 430 can determine that the user's finger or palm was in contact with user-actuatable element 301, e.g., was in such contact during generation of the user-perceptible temperature change by thermal output element 303, and therefore can determine that the user received the information conveyed by such temperature change. As a further option, responsive to such determination, logic circuit 305 or control circuitry 430 can terminate operation of thermal output element 303.

Thermal output element 303 of interface 300 can include any suitable element or combination of elements configured to generate a user-perceptible temperature change, for example at interface 300, or at an outer portion of housing 411, or at any other defined portion of system 400 that a user may touch during use. Examples of elements suitable for generating such a user-perceptible temperature change include, but are not limited to, thermoelectric devices, resistive members, inductive members, and infrared sources. One nonlimiting example of a thermoelectric device that can be provided as a thermal output element in the present interface is one or more Peltier elements. Optionally, the control circuitry 430 can be configured so as to cause current to flow in one direction through the Peltier element(s) so as selectively to cause the Peltier element(s) to generate a user-perceptible temperature increase. Additionally, or alternatively, the control circuitry 430 can be configured so as to cause current to flow in the other direction through the Peltier element(s) so as selectively to cause the Peltier element(s) to generate a user-perceptible temperature decrease. A configuration providing both heating and cooling can expand the amount of information that can be conveyed to a user via the same interface. Optionally, the thermal output element 303 and control circuitry 430 and logic circuit 305 can be configured so as to convey different types of information by switching between different types of temperature changes. Such switching optionally may be continuous, e.g., may make a continuous transition between different temperature changes.

It should be appreciated that the user-perceptible temperature changes generated by thermal output element 303 can be linked to any suitable user input, to any suitable condition of the aerosol-generating device or system, or any suitable combination of such inputs or conditions, so as to convey information to the user. The particular information to be conveyed by such user-perceptible temperature changes may vary based on the given device or system in which the thermal output element 303 is included. However, in preferred configurations the user-perceptible temperature change generated by thermal output element 303 may relate to the same parameter on the different devices.

Nonlimiting examples of resistive members that can be provided as a thermal output element in the present interface include resistive heating elements such as a resistive wire, a resistive coil, a sheet of resistive material, a sheet of resistive material cut into any shape, and a coating of resistive material. A nonlimiting example of inductive member that can be provided as a thermal output element in the present interface includes an induction heating element that heats a part of the interface or a part of the system or device. A nonlimiting example of an infrared source that can be provided as a thermal output element in the present interface includes an infrared light source. Another exemplary element suitable for generating a user-perceptible temperature change includes a heat exchanger in contact with a temperature changing component which is part of the device or system of which the interface is a part or is coupled to. Another exemplary element suitable for generating a user-perceptible temperature change includes a source of a flame, electric arc, plasma arc, exothermal chemical reaction, or explosion. Another exemplary element suitable for generating a user-perceptible temperature change includes use of a laser beam, such as a focused laser beam. Another exemplary element suitable for generating a user-perceptible temperature change includes elements for expanding or compressing gas within a fixed volume. Another exemplary element suitable for generating a user-perceptible temperature change includes elements for generating friction.

Figures 4A-4F are schematic illustrations of cross sections of interfaces including various exemplary thermal output elements for generating a user-perceptible temperature change. It should be appreciated that any of the interfaces illustrated in Figures 4A-4F suitably can be used as interface 30 illustrated in Figure 1, interface 30' illustrated in Figure 2, or interface 300 illustrated in Figures 3A-3C.

The exemplary interface 460 illustrated in Figure 4A includes user-actuatable input element 401, sensor 402, thermal output element 403, suitable electrical connections 404 between elements of interface 460, logic circuit 405, and connections 406 (such as pins) to other elements of an aerosol-generating device or system such as system 100 illustrated in Figure 1, system 200 illustrated in Figure 2, or system 400 illustrated in Figures 3B-3C. Optionally, input element 401 may be stacked on top of and coupled to one or more of sensor 402, thermal output element 403, logic circuit 405, and connections 406 via housing 407 so as to provide an integrated interface element that may be incorporated into various types of devices in a consistent and relatively straightforward manner. In the configuration illustrated in Figure 4A, thermal output element 403 includes a resistive member, such as a resistive heating coil configured to generate heat responsive to actuation by logic circuit 405, which in turn is configured to actuate the resistive heating coil by passing current through the coil responsive to an output signal received from control circuitry of the aerosol-generating device or system via connections 406. The resistive heating coil of thermal output element 403 may be in direct or indirect contact and in thermal communication with user-actuatable input element 401, and optionally also in direct or indirect contact with the housing of the device or system, so as to cause a user-perceptible temperature change, for example at the outer (upper) portion of user-actuatable input element 401 or at any other suitable (e.g., outer) defined portion of the housing of the aerosol-generating system or device that is in thermal communication with thermal output element 403.

The exemplary interface 461 illustrated in Figure 4B includes user-actuatable input element 411, sensor 412, thermal output element 413, suitable electrical connections 414 between elements of interface 461, logic circuit 415, connections 416 (such as pins) to other elements of an aerosol-generating device or system such as system 100 illustrated in Figure 1, system 200 illustrated in Figure 2, or system 400 illustrated in Figures 3B-3C, and optional housing 417 configured similarly as described elsewhere herein. In the configuration illustrated in Figure 4B, thermal output element 413 includes an alternative resistive member, such as a cut sheet of resistive heating material configured to generate heat responsive to actuation by logic circuit 415, which in turn is configured to actuate the resistive heating material by passing current through the material responsive to an output signal received from control circuitry of the aerosol-generating device or system via connections 416. The cut sheet of resistive heating material of thermal output element 413 may be in direct or indirect contact and in thermal communication with user-actuatable input element 411, and additionally or alternatively in direct or indirect contact with the housing of the device or system, so as to cause a user-perceptible temperature change, for example at the outer (upper) portion of user-actuatable input element 411 or at any other suitable (e.g., outer) defined portion of the housing of the aerosol-generating system or device that is in thermal communication with thermal output element 413.

The exemplary interface 462 illustrated in Figure 4C includes user-actuatable input element 421, sensor 422, thermal output element 423, suitable electrical connections 424 between elements of interface 462, logic circuit 425, connections 426 (such as pins) to other elements of an aerosol-generating device or system such as system 100 illustrated in Figure 1, system 200 illustrated in Figure 2, or system 400 illustrated in Figures 3B-3C, and optional housing 427 configured similarly as described elsewhere herein. In the configuration illustrated in Figure 4C, thermal output element 423 includes inductive member, such as an induction coil wound around a portion of the user-actuatable input element 421 and configured to generate a user-perceptible temperature change by heating up that portion responsive to actuation by logic circuit 425, which in turn is configured to actuate the induction coil by passing current through the coil responsive to an output signal received from control circuitry of the aerosol-generating device or system via connections 426. The induction coil of thermal output element 423 may be in direct or indirect contact with user-actuatable input element 421 so as to cause a user-perceptible temperature change, for example at the outer (upper) portion of user-actuatable input element 421 or at any other suitable (e.g., outer) defined portion of the housing of the aerosol-generating system or device that is in thermal communication with thermal output element 423.

The exemplary interface 463 illustrated in Figure 4D includes user-actuatable input element 431, sensor 432, thermal output element 433, suitable electrical connections 434 between elements of interface 463, logic circuit 435, connections 436 (such as pins) to other elements of an aerosol-generating device or system such as system 100 illustrated in Figure 1, system 200 illustrated in Figure 2, or system 400 illustrated in Figures 3B-3C, and optional housing 437 configured similarly as described elsewhere herein. In the configuration illustrated in Figure 4D, thermal output element 433 includes a thermoelectric device, such as a Peltier element configured to generate cooling or heating responsive to actuation by logic circuit 435, which in turn is configured to actuate the Peltier element by passing current in an appropriate direction through the element responsive to an output signal received from control circuitry of the aerosol-generating device or system via connections 436. The Peltier element of thermal output element 433 may be in direct or indirect contact and in thermal communication with user-actuatable input element 431, and additionally or alternatively in direct or indirect contact with the housing of the device or system, so as to cause a user-perceptible temperature change, for example at the outer (upper) portion of user-actuatable input element 431 or at any other suitable (e.g., outer) defined portion of the housing of the aerosol-generating system or device that is in thermal communication with thermal output element 433.

The exemplary interface 464 illustrated in Figure 4E includes user-actuatable input element 441, sensor 442, thermal output element 443, suitable electrical connections 444 between elements of interface 464, logic circuit 445, connections 446 (such as pins) to other elements of an aerosol-generating device or system such as system 100 illustrated in Figure 1, system 200 illustrated in Figure 2, or system 400 illustrated in Figures 3B-3C, and optional housing 447 configured similarly as described elsewhere herein. In the configuration illustrated in Figure 4E, thermal output element 443 includes another alternative resistive member, such as a coated layer of resistive heating material configured to generate heat responsive to actuation by logic circuit 445, which in turn is configured to actuate the resistive heating coil by passing current through the material responsive to an output signal received from control circuitry of the aerosol-generating device or system via connections 446. The coated layer of resistive heating material of thermal output element 443 may be disposed over and in direct or indirect contact and in thermal communication with user-actuatable input element 441, and additionally or alternatively in direct or indirect contact with the housing of the device or system, so as to cause a user-perceptible temperature change, for example at the outer (upper) surface of the coated layer of resistive heating material or at any other suitable (e.g., outer) defined portion of the housing of the aerosol-generating system or device that is in thermal communication with thermal output element 443.

The exemplary interface 465 illustrated in Figure 4F includes user-actuatable input element 451, sensor 452, thermal output element 453, suitable electrical connections 454 between elements of interface 465, logic circuit 455, connections 456 (such as pins) to other elements of an aerosol-generating device or system such as system 100 illustrated in Figure 1, system 200 illustrated in Figure 2, or system 400 illustrated in Figures 3B-3C, and optional housing 457 configured similarly as described elsewhere herein. In the configuration illustrated in Figure 4F, thermal output element 453 includes an infrared source, such as an infrared light source configured to generate infrared light 458 responsive to actuation by logic circuit 455, which in turn is configured to actuate the infrared source by passing current through the source responsive to an output signal received from control circuitry of the aerosol-generating device or system via connections 456. The infrared light source of thermal output element 453 may be in direct or indirect contact with user-actuatable input element 451 and configured so as to irradiate the user-actuatable input element 451 with infrared light 458, and additionally or alternatively in direct or indirect contact with the housing of the device or system, so as to cause a user-perceptible temperature change, for example at the outer (upper) portion of user-actuatable input element 451 or at any other suitable (e.g., outer) defined portion of the housing of the aerosol-generating system or device that is in thermal communication with thermal output element 453.

It should be appreciated that the components of interfaces such as illustrated in Figures 3A-3C and 4A-4F can have any suitable configuration and are not limited to the specifically illustrated elements or arrangements of elements. For example, certain elements of the interfaces optionally may be fully or partially integrated with one another. Illustratively, Figures 5A-5B are schematic illustrations of cross sections of exemplary interfaces with integrated user-actuatable input elements and thermal output elements. The exemplary interface 560 illustrated in Figure 5A includes user-actuatable input element 501 into which sensor 502 and thermal output element 503 are fully or partially integrated, suitable electrical connections 504 between elements of interface 560, logic circuit 505, housing 507, and connections 506 (such as pins) to other elements of an aerosol-generating device or system such as system 100 illustrated in Figure 1, system 200 illustrated in Figure 2, or system 400 illustrated in Figures 3B-3C. In the configuration illustrated in Figure 5A, thermal output element 503 is fully or partially embedded in user-actuatable input element 501. Additionally, or alternatively, optional sensor 502 is fully or partially embedded in user-actuatable input element 501. In the configuration illustrated in Figure 5A, thermal output element 503 includes a resistive member, such as a resistive heating coil configured to generate heat responsive to actuation by logic circuit 505, which in turn is configured to actuate the resistive heating coil by passing current through the coil responsive to an output signal received from control circuitry of the aerosol-generating device or system via connections 506. However, it should be appreciated that any other type of thermal output element, including but not limited to those described herein, suitably may be integrated with (e.g., embedded within) user-actuatable input element 501. As such, any suitable thermal output element 503 may be in direct contact and in thermal communication with user-actuatable input element 501, and optionally also in indirect contact with the housing of the device or system, so as to cause a user-perceptible temperature change, for example at the outer (upper) portion of user-actuatable input element 501 or at any other suitable (e.g., outer) defined portion of the housing of the aerosol-generating system or device that is in thermal communication with thermal output element 503.

The exemplary interface 561 illustrated in Figure 5B includes user-actuatable input element 511, sensor 512 partially or fully embedded within user-actuatable input element 511, thermal output element 513, suitable electrical connections 514 between elements of interface 561, logic circuit 515, connections 516 (such as pins) to other elements of an aerosol-generating device or system such as system 100 illustrated in Figure 1, system 200 illustrated in Figure 2, or system 400 illustrated in Figures 3B-3C, and optional housing 517 configured similarly as described elsewhere herein. In the configuration illustrated in Figure 5B, thermal output element 513 includes an alternative resistive member, such as a coated layer of resistive heating material configured to generate heat responsive to actuation by logic circuit 515, which in turn is configured to actuate the resistive heating coil by passing current through the material responsive to an output signal received from control circuitry of the aerosol-generating device or system via connections 516. The coated layer of resistive heating material of thermal output element 513 may be disposed over and in direct or indirect contact and in thermal communication with user-actuatable input element 511, and optionally also in direct or indirect contact with the housing of the device or system, so as to cause a user-perceptible temperature change, for example at the outer (upper) surface of the coated layer of resistive heating material or at any other suitable (e.g., outer) defined portion of the housing of the aerosol-generating system or device that is in thermal communication with thermal output element 513.

Additionally, it should be appreciated that the user-actuatable input element, sensor, housing, and logic circuit and the particular configurations of electrical connections are not essential elements of the present invention. For example, any of the interfaces illustrated in Figures 3A-3C, 4A-4F, and 5A-5B suitably can omit any suitable ones of the user-actuatable input element, sensor, housing, logic circuit, and any appropriate electrical connections.

The present thermal output elements may be used to convey any suitable information to a user via one or more user-perceptible temperature changes. For example, any suitable combination of a logic circuit coupled to the thermal output element and control circuitry of the aerosol-generating device or system may be configured so as to actuate the thermal output element responsive to an input signal. The input signal can have any suitable source within or outside of the aerosol-generating device or system. For example, a condition of the aerosol-generating device can cause the circuit to generate the input signal based upon which the thermal output element is actuated. That is, the input signal optionally corresponds to a condition of the aerosol-generating device. A variety of suitable conditions and statuses readily may be envisioned.

Illustratively, the condition may correspond to a status of a particular component of the aerosol-generating device. As one example, the user-perceptible temperature change (e.g., increase in temperature) can correspond to the temperature of the aerosol-generating element while the aerosol-generating element is warming up. As another example, the user-perceptible temperature change can correspond to the aerosol-generating element being ready to generate an aerosol (e.g., sufficiently pre-heated). As another example, the user-perceptible temperature change can correspond to the aerosol-generating element not yet being ready to generate an aerosol (e.g., not sufficiently pre-heated). As another example, the user-perceptible temperature change can correspond to an amount of the aerosol-forming substrate being insufficient to generate an aerosol or insufficient for a complete user experience (e.g., usage session). As another example, the user-perceptible temperature change can correspond to the charge level of the power supply. As another example, the user-perceptible temperature change can correspond to an aerosol-generating article being correctly positioned within the device or system. As another example, the user-perceptible temperature change can correspond to the device or system needing to be cleaned.

Additionally, or alternatively, the condition may correspond to the user's use of the aerosol-generating device. For example, the user-perceptible temperature change can correspond to the user experience (e.g., usage session) being over or almost over. As another example, the user-perceptible temperature change can correspond to user's consumption of the aerosol within a given time period, such as over the course of a usage session or over the course of a day. As another example, the user-perceptible temperature change can correspond to the user's consumption of the aerosol exceeding a threshold within a given time period, such as exceeding a threshold during a usage session or during the course of a day. As another example, the user-perceptible temperature change can correspond to use of a counterfeit aerosol-generating article with the device or system. As another example, the user-perceptible temperature change can correspond to the user's consumption of the aerosol exceeding a threshold within a given time period, such as exceeding a threshold during a usage session or during the course of a day. As another example, the user-perceptible temperature change can correspond to the length of the user's puff, or to the length of the user's puff exceeding a threshold. As another example, the user-perceptible temperature change can correspond to the device or system not being unlocked (for example using the aerosol-generating device or a peripheral device) before it is attempted to be used.

Optionally, any user-perceptible temperature change can be sufficiently high as to be unpleasant for the user, whilst still being safe for the user. Unpleasant user-perceptible temperature changes may be, for example, about 5 degrees Celsius or greater, or about 10 degrees Celsius or greater, for example in a range of about 5 degrees Celsius to about 10 degrees Celsius. Pleasant user-perceptible changes may be, for example, about 5 degrees Celsius or less, or about 2 degrees Celsius or less.

Any suitable combination of information may be conveyed to the user via corresponding user-perceptible temperature changes. Indeed, different user-perceptible temperature changes may be used to convey multiple different types of information. For example, a pleasant, warm user-perceptible temperature change may be used to convey when the aerosol-forming substrate is ready for consumption; an unpleasant, warm user-perceptible temperature change may be used to convey that someone is trying to use the device without unlocking it; and a pleasant, cold user-perceptible temperature change may be used to convey that the device or system needs to be cleaned. As another example, a pleasant, warm user-perceptible temperature change may be used to convey when the aerosol-forming substrate is ready for consumption; and a pleasant, cold user-perceptible temperature change may be used to convey that the aerosol-generating article needs to be replaced or refilled. As another example, a pleasant user-perceptible temperature may increase over the course of a usage session; and a pleasant, cold user-perceptible temperature change may be used to convey the end of the usage session.

Additionally, or alternatively, actuation of an input element (such as a user-actuatable input element) can generate the input signal based upon which the thermal output element is actuated. That is, the device or system optionally includes an input element configured to generate an input signal, wherein an appropriate circuit of the device or system is configured to cause the thermal output element to generate the user-perceptible temperature change responsive to the input signal. Nonlimiting configurations of interfaces that include a user-actuatable input element and a thermal output element are provided elsewhere herein, such as with reference to Figures 3A-3C, 4A-4F, and 5A-5B.

Interfaces including a thermal output element optionally may include one or more other elements, such as an optional user-actuatable interface element or to an optional sensor. The thermal output element and any other elements preferably are fixedly coupled to one another so as to be immovable relative to one another before or after installation in a device. For example, some configurations of the present thermal output element optionally include a housing configured to securably couple the thermal output element to one or more other elements, such as an optional user-actuatable interface element or to an optional sensor. However, it should be appreciated that the thermal output element and any other elements can be coupled to one another in any suitable arrangement, for example connected by flexible conductors, such as wires, that provide the elements with some freedom of movement relative to one another.

Regardless of the particular manner in which the thermal output element and any other elements of the interface are coupled to one another, the interface can be included in any suitable device or system, including but not limiting to an aerosol-generating device or system, and in any suitable element of such a device or system. An aerosol-generating system can include an aerosol-generating device that includes a thermal output element, e.g., a device such as device 100, 200, or 400, and optionally can include one or more peripheral devices. Examples of peripheral devices that can be included in the present aerosol-generating systems include, but are not limited to, one or multiple of a charger for the aerosol-generating device, a charging case for the aerosol-generating device, a holder for one or more aerosol-generating articles, a smartphone, tablet computer, or personal computer configured to communicate directly or indirectly with the aerosol-generating device, or a vending machine configured to sell the aerosol-generating device or aerosol-generating articles. Optionally, one or more of such peripheral devices can include the present interface. In some configurations, the interface has a consistent appearance or a consistent function, or a consistent appearance and a consistent function, in each such aerosol-generating device or peripheral device (if any) in which the interface is included.

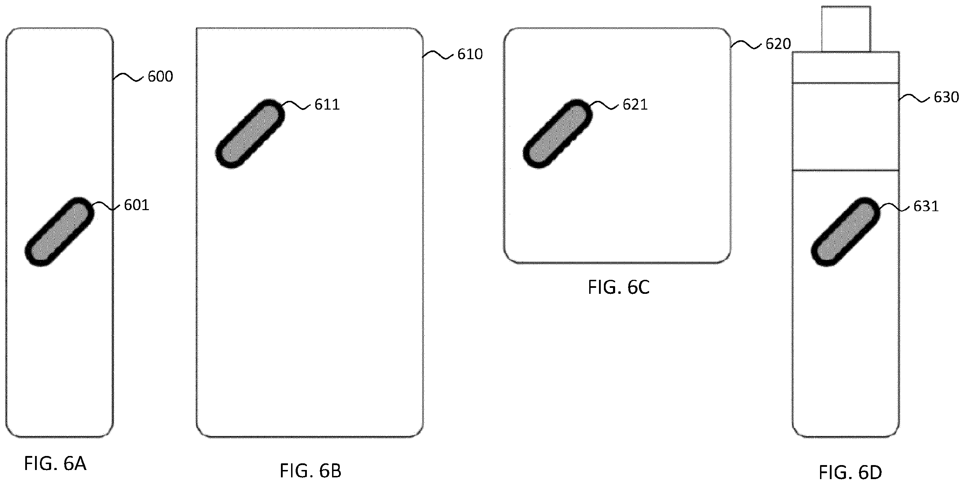

For example, Figures 6A-6D are schematic illustrations of exemplary devices including the present interfaces. Figure 6A illustrates an aerosol-generating device 600 including interface 601 that includes a thermal output element coupled to a housing of device 600. Figure 6B illustrates an exemplary peripheral device, such as a charging case 610 for an aerosol-generating device, including interface 611 that includes a thermal output element coupled to a housing of the device and having a consistent appearance or consistent function, or a consistent appearance and a consistent function, as interface 601. Figure 6C illustrates another exemplary peripheral device, such as a holder 620 for a plurality of aerosol-generating articles, including interface 621 that includes a thermal output element coupled to a housing of the device and having a consistent appearance or consistent function, or a consistent appearance and a consistent function, as interfaces 601 and 611. Figure 6D illustrates an exemplary element of an aerosol-forming system, such as aerosol-generating article 630 (which optionally holds a liquid or gel aerosol-forming substrate), including interface 631 that includes a thermal output element coupled to a housing of the article and having a consistent appearance or consistent function, or a consistent appearance and a consistent function, as interfaces 601, 611, and 621. By including such consistent interfaces on multiple devices, consistent information may be consistently conveyed through the thermal output element, thus improving the user's interaction with different elements of the aerosol-generating system.

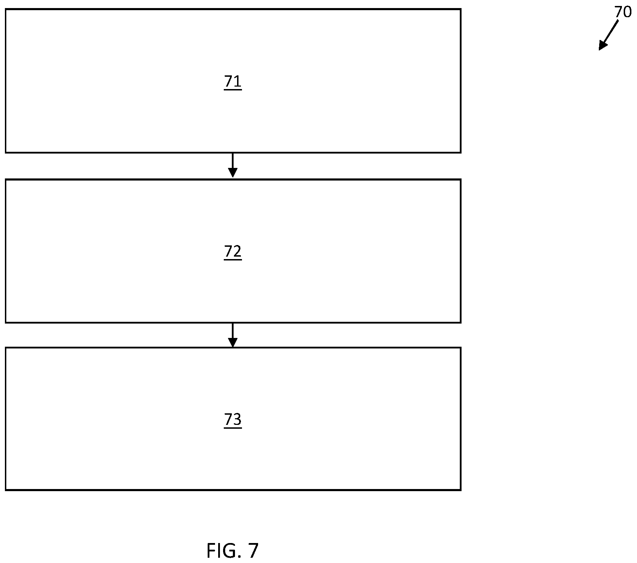

Figure 7 illustrates a flow of operations in an exemplary method 70. Although the operations of method 70 are described with reference to elements of systems 100, 200, and 400 it should be appreciated that the operations can be implemented by any other suitably configured systems or devices.

Method 70 includes providing a thermal output element coupled to a housing of an aerosol-generating device (71). The aerosol-generating device may include an aerosol-generating element configured to generate an aerosol using any suitable aerosol-forming substrate, such as a liquid, gel, or solid. The thermal output element may be provided as part of an interface that optionally includes any suitable combination of one or more other elements, such as one or more sensors, one or more user-actuatable interface elements, or one or more logic circuits, in any suitable configuration relative to one another and relative to the housing of the aerosol-generating device. Nonlimiting examples of aerosol-generating devices are described herein with reference to Figures 1, 2, and 3B-3C. Nonlimiting examples of interfaces including thermal output elements are described herein with reference to Figures 1, 2, 3A-3C, 4A-4F, 5A-5B, and 6A-6D.

Method 70 illustrated in Figure 7 includes providing a circuit coupled to the thermal output element (72). For example, in some configurations such as described with reference to Figures 3A-3C, 4A-4F, and 5A-5B, the thermal output element optionally is coupled to a logic circuit provided as part of an interface, and the logic circuit is configured to actuate the thermal output element. As a further option, the logic circuit optionally is coupled to control circuitry of the aerosol-generating device, and the control circuitry is configured to cause the logic circuit to actuate the thermal output element. Alternatively, the thermal output element optionally is coupled to the control circuitry of the aerosol-generating device without such a logic circuit, and the control circuitry is configured to actuate the thermal output element. Any other suitable circuit coupled to the thermal output element can be provided.

Method 70 illustrated in Figure 7 also includes causing, by the circuit, the thermal output element to generate a user-perceptible temperature change (73). For example, in some configurations such as described with reference to Figures 3A-3C, 4A-4F, and 5A-5B, the circuit optionally may actuate the thermal output element responsive to actuation of a user-actuatable interface element. Additionally, or alternatively, the circuit optionally may actuate the thermal output element based on a condition of the aerosol-generating device. Various options for actuating the thermal output element are described elsewhere herein.

Although some configurations of the invention have been described in relation to a system comprising a control body and a separate but connectable cartridge, it should be clear that the elements suitably can be provided in a one-piece aerosol-generating system.

It should also be clear that alternative configurations are possible within the scope of the invention as defined in the appended claims. For example, the present thermal output elements suitably may be integrated into any type of device or system, and are not limited to use in aerosol-generating devices and systems. Illustratively, the present thermal output elements may be included in medical devices, smartphones, or the like.

## Claims

1. An aerosol-generating device, comprising:
a housing (11, 21) comprising an air inlet (15), an air outlet (22), and an airflow path (23) extending therebetween;
an aerosol-generating element (25) disposed within the housing and configured to generate an aerosol;
a thermal output element (303) coupled to the housing, the thermal output
element being distinct from the aerosol-generating element (25); and
a circuit (13) coupled to the thermal output element (303) and configured to cause the thermal output element to generate a user-perceptible temperature change.

2. An aerosol-generating device according to claim 1, further comprising a sensor (302) coupled to the circuit (13) and configured to output to the circuit a temperature of the thermal output element (303).

3. An aerosol-generating device according to claim 2, wherein the circuit (13) is configured to adjust operation of the thermal output element (303) or to terminate operation of the thermal output element based on the temperature received from the sensor (302).

4. An aerosol-generating device according to any one of the preceding claims, wherein the thermal output element (303) is selected from the group consisting of a thermoelectric device, a resistive member, an inductive member, and an infrared source.

5. An aerosol-generating device according to any one of the preceding claims, wherein the user-perceptible temperature change comprises cooling.

6. An aerosol-generating device according to any one of the preceding claims, wherein the user-perceptible temperature change comprises heating.

7. An aerosol-generating device according to any one of the preceding claims, further comprising an input element (301) configured to generate an input signal, wherein the circuit (13) is configured to cause the thermal output element (303) to generate the user-perceptible temperature change responsive to the input signal.

8. An aerosol-generating device according to claim 7, wherein the input element (301) is user-actuatable, optionally wherein the thermal output element (303) is located sufficiently close to the input element that the user can perceive the temperature change while actuating the input element, further optionally wherein the input element and the thermal output element are arranged in a stack.

9. An aerosol-generating device according to claim 7 or claim 8, wherein the input element (301) is selected from the group consisting of a mechanical button, a membrane button, a mechanical switch, a rotary encoder, a dial, a knob, a capacitive touch button, a resistive touch button, a joystick, a slider, a trigger button, a touch screen, and a magnetic switch.

10. An aerosol-generating device according to claim 7 wherein the input signal corresponds to a condition of the aerosol-generating device.

11. An aerosol-generating system comprising an aerosol-generating device (600) according to any one of the preceding claims and a peripheral device (610, 620) in operable communication with the aerosol-generating device, wherein the peripheral device is configured to transmit to the aerosol-generating device a signal corresponding to a condition of the aerosol-generating device, and wherein the circuit is configured to cause the thermal output element (303) to generate the user-perceptible temperature change responsive to receipt of the signal.

12. An aerosol-generating system according to claim 11, wherein the peripheral device comprises a device charger, charging case (610), consumable holder (620), smartphone, tablet computer, personal computer, or vending machine.

13. An aerosol-generating system according to claim 11 or claim 12, wherein the circuit determines a status of the device, and wherein the user-perceptible temperature change indicates the status of the device.

14. An aerosol-generating system comprising an aerosol-generating device according to any one of claims 1-10 and an aerosol-forming substrate, optionally wherein the aerosol-forming substrate comprises nicotine.

15. A method (70) for generating an output in an aerosol-generating device, the aerosol-generating device comprising a housing (11, 21) comprising an air inlet (15), an air outlet (22), an airflow path (23) extending therebetween, and an aerosol-generating element (25) disposed within the housing and configured to generate an aerosol, the method comprising:
providing (71) a thermal output element (303) coupled to the housing, the thermal output element being distinct from the aerosol-generating element;
providing (72) a circuit (13) coupled to the thermal output element; and
causing (73), by the circuit, the thermal output element to generate a user-perceptible temperature change.

## Patentansprüche

1. Aerosolerzeugungsvorrichtung, aufweisend:
ein Gehäuse (11, 21), umfassend einen Lufteinlass (15), einen Luftauslass (22) und einen sich dazwischen erstreckenden Luftstromweg (23);
ein innerhalb des Gehäuses angeordnetes und zum Erzeugen eines Aerosols ausgelegtes Aerosolerzeugungselement (25);
ein mit dem Gehäuse gekoppeltes Wärmeabgabeelement (303),
wobei das Wärmeabgabeelement von dem Aerosolerzeugungselement (25) getrennt ist; und
eine mit dem Wärmeabgabeelement (303) gekoppelte und zum Veranlassen des Wärmeabgabeelements zum Erzeugen einer für einen Benutzer wahrnehmbaren Temperaturänderung ausgelegte Schaltung (13).

2. Aerosolerzeugungsvorrichtung nach Anspruch 1, ferner umfassend einen mit der Schaltung (13) gekoppelten und zum Ausgeben einer Temperatur des Wärmeabgabeelements (303) an die Schaltung ausgelegten Sensor (302).

3. Aerosolerzeugungsvorrichtung nach Anspruch 2, wobei die Schaltung (13) zum Einstellen des Betriebs des Wärmeabgabeelements (303) oder zum Beenden des Betriebs des Wärmeabgabeelements basierend auf der von dem Sensor (302) empfangenen Temperatur ausgelegt ist.

4. Aerosolerzeugungsvorrichtung nach einem beliebigen der vorhergehenden Ansprüche, wobei das Wärmeabgabeelement (303) ausgewählt ist aus der Gruppe bestehend aus einer thermoelektrischen Vorrichtung, einem Widerstandselement, einem Induktionselement und einer Infrarotquelle.

5. Aerosolerzeugungsvorrichtung nach einem beliebigen der vorhergehenden Ansprüche, wobei die von dem Benutzer wahrnehmbare Temperaturänderung ein Kühlen umfasst.

6. Aerosolerzeugungsvorrichtung nach einem beliebigen der vorhergehenden Ansprüche, wobei die von dem Benutzer wahrnehmbare Temperaturänderung ein Erwärmen umfasst.

7. Aerosolerzeugungsvorrichtung nach einem der vorhergehenden Ansprüche, ferner umfassend ein zum Erzeugen eines Eingangssignals ausgelegtes Eingangselement (301), wobei die Schaltung (13) zum Veranlassen des Wärmeabgabeelements (303) zum Erzeugen der von dem Benutzer wahrnehmbaren Temperaturänderung in Reaktion auf das Eingangssignal ausgelegt ist.

8. Aerosolerzeugungsvorrichtung nach Anspruch 7, wobei das Eingangselement (301) von einem Benutzer betätigbar ist, optional, wobei das Wärmeabgabeelement (303) ausreichend nahe an dem Eingangselement angeordnet ist, sodass der Benutzer die Temperaturänderung während der Betätigung des Eingangselements wahrnehmen kann, ferner optional, wobei das Eingangselement und das Wärmeabgabeelement in einem Stapel angeordnet sind.

9. Aerosolerzeugungsvorrichtung nach Anspruch 7 oder Anspruch 8, wobei das Eingabeelement (301) ausgewählt ist aus der Gruppe bestehend aus einer mechanischen Taste, einer Membrantaste, einem mechanischen Schalter, einem Drehgeber, einem Drehknopf, einem Knopf, einer kapazitiven Berührungstaste, einer resistiven Berührungstaste, einem Joystick, einem Schieberegler, einer Auslösetaste, einem Berührungsbildschirm und einem Magnetschalter.

10. Aerosolerzeugungsvorrichtung nach Anspruch 7, wobei das Eingangssignal einem Zustand der Aerosolerzeugungsvorrichtung entspricht.

11. Aerosolerzeugungssystem, umfassend eine Aerosolerzeugungsvorrichtung (600) nach einem der vorhergehenden Ansprüche und eine Peripherievorrichtung (610, 620) in Wirkverbindung mit der Aerosolerzeugungsvorrichtung, wobei die Peripherievorrichtung zum Übertragen eines Signals an die Aerosolerzeugungsvorrichtung ausgelegt ist, das einem Zustand der Aerosolerzeugungsvorrichtung entspricht, und wobei die Schaltung zum Veranlassen des Wärmeabgabeelements (303) zum Erzeugen der von dem Benutzer wahrnehmbaren Temperaturänderung in Reaktion auf den Empfang des Signals ausgelegt ist.

12. Aerosolerzeugungssystem nach Anspruch 11, wobei die Peripherievorrichtung ein Vorrichtungsladegerät, einen Ladebehälter (610), einen Verbrauchsartikelhalter (620), ein Smartphone, einen Tablet-Computer, einen Personal Computer oder einen Verkaufsautomaten umfasst.

13. Aerosolerzeugungssystem nach Anspruch 11 oder Anspruch 12, wobei die Schaltung einen Zustand der Vorrichtung ermittelt, und wobei die von dem Benutzer wahrnehmbare Temperaturänderung den Zustand der Vorrichtung angibt.

14. Aerosolerzeugungssystem, umfassend eine Aerosolerzeugungsvorrichtung nach einem der Ansprüche 1-10 und ein aerosolbildendes Substrat, wobei das aerosolbildende Substrat optional Nikotin umfasst.

15. Verfahren (70) zum Erzeugen einer Ausgabe in einer Aerosolerzeugungsvorrichtung, wobei die Aerosolerzeugungsvorrichtung ein Gehäuse (11, 21), das einen Lufteinlass (15), einen Luftauslass (22) und einen sich dazwischen erstreckenden Luftstromweg (23) umfasst, und ein innerhalb des Gehäuses angeordnetes und zum Erzeugen eines Aerosols ausgelegtes Aerosolerzeugungselement (25) umfasst, wobei das Verfahren umfasst:
Bereitstellen (71) eines mit dem Gehäuse gekoppelten Wärmeabgabeelements (303), wobei das Wärmeabgabeelement von dem Aerosolerzeugungselement getrennt ist;
Bereitstellen (72) einer mit dem Wärmeabgabeelement gekoppelten Schaltung (13); und
Veranlassen (73), durch die Schaltung, des Wärmeabgabeelements zum Erzeugen einer von einem Benutzer wahrnehmbaren Temperaturänderung.

## Revendications

1. Dispositif de génération d'aérosol comprenant :
un logement (11, 21) comprenant une entrée d'air (15), une sortie d'air (22) et une voie d'écoulement d'air (23) s'étendant entre celles-ci ;
un élément de génération d'aérosol (25) disposé au sein du logement et configuré pour générer un aérosol ;
un élément de sortie thermique (303) couplé au logement,
l'élément de sortie thermique étant distinct de l'élément de génération d'aérosol (25) ; et
un circuit (13) couplé à l'élément de sortie thermique (303) et configuré pour amener l'élément de sortie thermique à générer un changement de température perceptible par l'utilisateur.

2. Dispositif de génération d'aérosol selon la revendication 1, comprenant en outre un capteur (302) couplé au circuit (13) et configuré pour délivrer e sortie au circuit une température de l'élément de sortie thermique (303) .

3. Dispositif de génération d'aérosol selon la revendication 2, dans lequel le circuit (13) est configuré pour régler le fonctionnement de l'élément de sortie thermique (303) ou pour interrompre le fonctionnement de l'élément de sortie thermique sur la base de la température reçue depuis le capteur (302).

4. Dispositif de génération d'aérosol selon l'une quelconque des revendications précédentes, dans lequel l'élément de sortie thermique (303) est choisi dans le groupe constitué par un dispositif thermoélectrique, un élément résistif, un élément inductif et une source infrarouge.

5. Dispositif de génération d'aérosol selon l'une quelconque des revendications précédentes, dans lequel le changement de température perceptible par l'utilisateur comprend un refroidissement.

6. Dispositif de génération d'aérosol selon l'une quelconque des revendications précédentes, dans lequel le changement de température perceptible par l'utilisateur comprend un chauffage.

7. Dispositif de génération d'aérosol selon l'une quelconque des revendications précédentes, comprenant en outre un élément d'entrée (301) configuré pour générer un signal d'entrée, dans lequel le circuit (13) est configuré pour amener l'élément de sortie thermique (303) à générer le changement de température perceptible par l'utilisateur en réponse au signal d'entrée.

8. Dispositif de génération d'aérosol selon la revendication 7, dans lequel l'élément d'entrée (301) peut être actionné par l'utilisateur, facultativement dans lequel l'élément de sortie thermique (303) est situé suffisamment près de l'élément d'entrée pour que l'utilisateur puisse percevoir le changement de température tout en actionnant l'élément d'entrée, facultativement en outre dans lequel l'élément d'entrée et l'élément de sortie thermique sont agencés en une pile.

9. Dispositif de génération d'aérosol selon la revendication 7 ou la revendication 8, dans lequel l'élément d'entrée (301) est choisi dans le groupe constitué d'un bouton mécanique, d'un bouton à membrane, d'un commutateur mécanique, d'un codeur rotatif, d'un cadran, d'un pommeau, d'un bouton tactile capacitif, d'un bouton tactile résistif, d'une manette, d'un curseur, d'un bouton de déclenchement, d'un écran tactile et d'un commutateur magnétique.

10. Dispositif de génération d'aérosol selon la revendication 7, dans lequel le signal d'entrée correspond à un état du dispositif de génération d'aérosol.

11. Système de génération d'aérosol comprenant un dispositif de génération d'aérosol (600) selon l'une quelconque des revendications précédentes et un dispositif périphérique (610, 620) en communication fonctionnelle avec le dispositif de génération d'aérosol, dans lequel le dispositif périphérique est configuré pour transmettre au dispositif de génération d'aérosol un signal correspondant à une condition du dispositif de génération d'aérosol, et dans lequel le circuit est configuré pour amener l'élément de sortie thermique (303) à générer le changement de température perceptible par l'utilisateur en réponse à la réception du signal.

12. Système de génération d'aérosol selon la revendication 11, dans lequel le dispositif périphérique comprend un chargeur de dispositif, un boîtier de charge (610), un support de consommable (620), un téléphone intelligent, un ordinateur tablette, un ordinateur personnel ou un distributeur automatique.

13. Système de génération d'aérosol selon la revendication 11 ou la revendication 12, dans lequel le circuit détermine un statut du dispositif, et dans lequel le changement de température perceptible par l'utilisateur indique le statut du dispositif.

14. Système de génération d'aérosol comprenant un dispositif de génération d'aérosol selon l'une quelconque des revendications 1 à 10 et un substrat formant aérosol facultativement dans lequel le substrat formant aérosol comprend de la nicotine.

15. Procédé (70) de génération d'une sortie dans un dispositif de génération d'aérosol, le dispositif de génération d'aérosol comprenant un logement (11, 21) comprenant une entrée d'air (15), une sortie d'air (22) et une voie d'écoulement d'air (23) s'étendant entre celles-ci, et un élément de génération d'aérosol (25) disposé au sein du logement et configuré pour générer un aérosol, le procédé comprenant :
la fourniture (71) d'un élément de sortie thermique (303) couplé au logement, l'élément de sortie thermique étant distinct de l'élément de génération d'aérosol ;
la fourniture (72) d'un circuit (13) couplé à l'élément de sortie thermique ; et
le fait d'amener (73), par le circuit, la génération par l'élément de sortie thermique d'un changement de température perceptible par l'utilisateur.
